(19) Europäisches Patentamt / European Patent Office / Office européen des brevets

(11) EP 2 463 347 A2

(12) **EUROPEAN PATENT APPLICATION**

(43) Date of publication:
13.06.2012 Bulletin 2012/24

(51) Int Cl.:
*C09J 7/00* (2006.01)   *C09J 7/02* (2006.01)

(21) Application number: 11193022.8

(22) Date of filing: 12.12.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 10.12.2010 JP 2010275356

(71) Applicant: Nitto Denko Corporation
Ibaraki-shi, Osaka 567-8680 (JP)

(72) Inventors:
• Yamanaka, Eiji
  Ibaraki-shi, Osaka 567-8680 (JP)
• Higuchi, Naoaki
  Ibaraki-shi, Osaka 567-8680 (JP)
• Nakashima, Tooru
  Ibaraki-shi, Osaka 567-8680 (JP)

(74) Representative: Grünecker, Kinkeldey,
Stockmair & Schwanhäusser
Leopoldstrasse 4
80802 München (DE)

(54) **Pressure-sensitive adhesive tape or sheet**

(57)    Disclosed is a pressure-sensitive adhesive tape or sheet having an adhesive face which includes two or more different pressure-sensitive adhesives each capable of acting on an adherend and exhibits adhesiveness and debonding capability both at high levels. The pressure-sensitive adhesive tape or sheet has an adhesive face being substantially smooth and including at least on region composed of a first pressure-sensitive adhesive and at least one region composed of a pressure-sensitive adhesive other than the first pressure-sensitive adhesive. In the pressure-sensitive adhesive tape or sheet, the region composed of the first pressure-sensitive adhesive and the region composed of the other pressure-sensitive adhesive than the first pressure-sensitive adhesive preferably are preferably in the form of stripes extending in the longitudinal direction.

[Fig. 1]

EP 2 463 347 A2

**Description**

Technical Field

The present invention relates to pressure-sensitive adhesive tapes or sheets. More specifically, the present invention relates to a pressure-sensitive adhesive tape or sheet which has an adhesive face being substantially smooth and including at least one region composed of a first pressure-sensitive adhesive and at least one region composed of a pressure-sensitive adhesive other than the first pressure-sensitive adhesive. The present invention also relates to a pressure-sensitive adhesive tape or sheet which exhibits satisfactory adhesive properties during bonding with an adherend and can be easily separated from the adherend upon debonding after use, for the purpose typically of recycling or reworking. In addition, the present invention relates to a pressure-sensitive adhesive tape or sheet which exhibits satisfactory adhesive properties during bonding with an adherend and can be easily separated from the adherend through heating upon debonding after use, for the purpose typically of recycling or reworking.

Background Art

Base polymers for use in acrylic pressure-sensitive adhesives have been prepared by subjecting monomer components containing an alkyl (meth)acrylate as a principal component to solution polymerization in a solvent (organic solvent). Use of such organic solvents, however, is desirably minimized, because air pollution and other environmental issues should be effectively controlled to meet recent demands for the conservation of the global environment. As a possible solution to this, it is advantageous particularly in safety and environment to produce solvent-free pressure-sensitive adhesive tapes or sheets by subjecting monomer components to polymerization through ultraviolet irradiation without using solvents to form pressure-sensitive adhesive layers.

Demands have been recently made to allow pressure-sensitive adhesive tapes or sheets (e.g., acrylic pressure-sensitive adhesive tapes or sheets) to exhibit two or more different functions to satisfy a variety of requirements. Typically, resource savings and recycling are often demanded with raising of environmental awareness.

Independently, some acrylic pressure-sensitive adhesive tapes contain microparticles [pressure-sensitive adhesive tapes each including a pressure-sensitive adhesive layer containing microparticles (tacky adhesive layer containing microparticles); acrylic foam-like pressure-sensitive adhesive tapes]. These are frequently used for purposes where bond strength and/or shear strength at normal temperature is required (e.g., for purposes of bonding members in various fields such as automobiles, mechanical parts, electric appliances, and building materials). Such microparticle-containing acrylic pressure-sensitive adhesive tapes exhibit high bond reliability owing to their high bond strength, but the high bond strength impedes separation and debonding of the bond under conditions where resource savings and/or recycling is required.

For example, microparticle-containing acrylic pressure-sensitive adhesive tapes are used for the fixation of liquid crystal display (LCD) modules and of backlight units, because the tapes satisfy the requirements such as high bond strength, satisfactory bump absorptivity, and good impact absorptivity. The tapes are to be peeled off in reworking to correct application failure of the tapes during production processes or in repairing to repair certain defects found in inspections after the affixation of the tapes. In these cases, however, the high bond strengths of the microparticle-containing acrylic pressure-sensitive adhesive tapes may impede smooth peeling or, even if the tapes are peeled off, may damage members to which the tapes have been affixed to thereby impede the reuse of the members.

Under these circumstances, there has been proposed a heat-expandable/removable acrylic pressure-sensitive adhesive tape which maintains a high dry bond strength during bonding but shows a decreased bond strength as a result of heating upon separating/debonding of the bond and can be easily separated or debonded from the adherend (see patent literature (PTL) 1). The heat-expandable/removable acrylic pressure-sensitive adhesive tape is intended to have both satisfactory adhesion performance and satisfactory debonding performance by including a microparticle-containing viscoelastic substrate and, provided on at least one side thereof, a pressure-sensitive adhesive layer containing a thermal blowing agent. However, when the adhesion performance is emphasized, the pressure-sensitive adhesive layer should contain a smaller amount of the thermal blowing agent, and the resulting pressure-sensitive adhesive tape tends to show insufficient debonding performance. In contrast, when the debonding performance is emphasized, the pressure-sensitive adhesive layer should contain a larger amount of the thermal blowing agent, and the resulting pressure-sensitive adhesive tape tends to show insufficient adhesion performance. Thus, the adhesion performance and the debonding performance are in a trade-off relation, and it has been difficult for a pressure-sensitive adhesive tape to satisfy these properties at high level.

A rolled pressure-sensitive adhesive tape for a cleaner, which partially includes convex portions, has been known as a pressure-sensitive adhesive tape having both satisfactory adhesion performance to an adherend and satisfactory releasability from the adherend (see PTL 2). The rolled pressure-sensitive adhesive tape for a cleaner has a structure including a first pressure-sensitive adhesive layer and, arranged thereon, a stripe-shaped low-tackiness second pressure-sensitive adhesive layer. The adhesive tape is, however, designed so that the underlying (first) pressure-sensitive adhesive layer be not in contact with an adherend under regular affixation conditions but be in contact with the adherend upon further application of pressing force. In other words, the adhesive tape is not designed so that the different pressure-sensitive adhesive layers be in contact simultaneously with the adherend without special operations, and thereby fails to take advantages of the functions of the respective pressure-sensitive adhesive layers.

Citation List

Patent Literature

PTL 1: Japanese Unexamined Patent Application Publication (JP-A) No. 2008-120903
PTL 2: Japanese Unexamined Utility Model Registration Application Publication (JP-U) No. S61-180665

Summary of Invention

Technical Problem

Accordingly, an object of the present invention is to provide a pressure-sensitive adhesive tape or sheet having an adhesive face (pressure-sensitive adhesive face), which adhesive face includes two or more different pressure-sensitive adhesives each capable of acting on an adherend and has adhesiveness and debonding capability both at high levels.
Another object of the present invention is to provide a pressure-sensitive adhesive tape or sheet having an adhesive face, which adhesive face includes two or more different pressure-sensitive adhesives each capable of acting on an adherend and has adhesiveness and thermal debonding capability both at high levels, and the pressure-sensitive adhesive tape or sheet exhibits a high dry bond strength in a bond during bonding, but shows a reduced bond strength as a result of heating upon separating/debonding of the bond, and can be easily separated and debonded.

Solution to Problem

After intensive investigations to achieve the objects, the present inventors have found that, when a pressure-sensitive adhesive tape or sheet is designed to have an adhesive face being substantially smooth and including at least one region composed of a first pressure-sensitive adhesive and at least one region composed of a pressure-sensitive adhesive other than the first pressure-sensitive adhesive, the resulting pressure-sensitive adhesive tape or sheet allows two or more different pressure-sensitive adhesives to function or act simultaneously on an adherend without needing a special operation and exhibits adhesiveness and debonding capability both at high levels. The present invention has been made based on these findings.
Specifically, the present invention provides, in an aspect, a pressure-sensitive adhesive tape or sheet which includes an adhesive face, the adhesive face being substantially smooth and including at least one region composed of a first pressure-sensitive adhesive; and at least one region composed of a pressure-sensitive adhesive other than the first pressure-sensitive adhesive.
In a preferred embodiment of the pressure-sensitive adhesive tape or sheet, the at least one region composed of the first pressure-sensitive adhesive and the at least one region composed of the other pressure-sensitive adhesive than the first pressure-sensitive adhesive are in the form of longitudinal stripes (stripes extending in the lengthwise direction or machine direction).
In the pressure-sensitive adhesive tape or sheet, the at least one region composed of the first pressure-sensitive adhesive and being in the form of a longitudinal stripe, and the at least one region composed of the other pressure-sensitive adhesive than the first pressure-sensitive adhesive and being in the form of a longitudinal stripe are preferably provided by a pressure-sensitive adhesive layer in which the first pressure-sensitive adhesive is covered with the other pressure-sensitive adhesive than the first pressure-sensitive adhesive.
In the pressure-sensitive adhesive tape or sheet, at least one pressure-sensitive adhesive selected from the first pressure-sensitive adhesive and the other pressure-sensitive adhesive than the first pressure-sensitive adhesive is preferably a pressure-sensitive adhesive containing a thermal blowing agent.
In the pressure-sensitive adhesive tape or sheet, at least one region composed of the pressure-sensitive adhesive containing a thermal blowing agent preferably occupies 20 percent by area or more of the total area of the adhesive face.
In the pressure-sensitive adhesive tape or sheet, the pressure-sensitive adhesive containing a thermal blowing agent preferably has a thickness of from 10 to 300 μm.

In a preferred embodiment of the pressure-sensitive adhesive tape or sheet, the pressure-sensitive adhesive containing a thermal blowing agent is formed from a pressure-sensitive adhesive composition and has a solvent-insoluble content of from 35 to 99 percent by weight, which pressure-sensitive adhesive composition includes a monomer mixture containing an alkyl (meth)acrylate whose alkyl moiety having 2 to 18 carbon atoms, or a partial polymer of the monomer mixture; a photoinitiator; a thermal blowing agent; and a multifunctional (meth)acrylate.

In another preferred embodiment of the pressure-sensitive adhesive tape or sheet, the pressure-sensitive adhesive composition includes the photoinitiator in a content of from 0.001 to 5 parts by weight, the thermal blowing agent in a content of from 10 to 200 parts by weight, and the multifunctional (meth)acrylate in a content of from 0.001 to 5 parts by weight, per 100 parts by weight of the monomer mixture containing the alkyl (meth)acrylate whose alkyl moiety having 2 to 18 carbon atoms.

In the pressure-sensitive adhesive tape or sheet, the thermal blowing agent is preferably heat-expandable microspheres.

In the pressure-sensitive adhesive tape or sheet, at least one pressure-sensitive adhesive selected from the first pressure-sensitive adhesive and the other pressure-sensitive adhesive than the first pressure-sensitive adhesive is preferably a pressure-sensitive adhesive containing microparticles.

In a preferred embodiment of the pressure-sensitive adhesive tape or sheet, the pressure-sensitive adhesive containing microparticles is formed from a pressure-sensitive adhesive composition including a monomer mixture containing the alkyl (meth)acrylate whose alkyl moiety having 2 to 18 carbon atoms, or a partial polymer of the monomer mixture; a photoinitiator; microparticles; and a multifunctional (meth)acrylate.

The present invention provides, in another aspect, a method for producing a pressure-sensitive adhesive tape or sheet, which method includes: the step 1 of providing on a separator a pressure-sensitive adhesive composition for the formation of a first pressure-sensitive adhesive, and at least one pressure-sensitive adhesive composition for the formation of a pressure-sensitive adhesive other than the first pressure-sensitive adhesive; and the step 2 of obtaining a pressure-sensitive adhesive tape or sheet having an adhesive face, the adhesive face being substantially smooth and including at least one region composed of the first pressure-sensitive adhesive; and at least one region composed of the other pressure-sensitive adhesive than the first pressure-sensitive adhesive.

In the method for producing a pressure-sensitive adhesive tape or sheet, the step 1 is preferably the step of providing on part of the separator the pressure-sensitive adhesive composition for the formation of the first pressure-sensitive adhesive, and subsequently providing the at least one pressure-sensitive adhesive composition for the formation of the other pressure-sensitive adhesive than the first pressure-sensitive adhesive so as to lie on the pressure-sensitive adhesive composition for the formation of the first pressure-sensitive adhesive.

In the method for producing a pressure-sensitive adhesive tape or sheet, the step 2 is preferably the step of subjecting the compositions to polymerization to thereby obtain the pressure-sensitive adhesive tape or sheet which includes an adhesive face, the adhesive face being substantially smooth and including at least one region composed of the first pressure-sensitive adhesive; and at least one region composed of the pressure-sensitive adhesive other than the first pressure-sensitive adhesive.

As used herein the term "debonding capability (disjoining capability)" refers to such a property that a pressure-sensitive adhesive tape is separated or peeled off from adherends, whereby articles affixed to each other through the pressure-sensitive adhesive tape can be easily separated from each other.

Advantageous Effects of Invention

The pressure-sensitive adhesive tape or sheet according to the present invention allows two or more different pressure-sensitive adhesives to act on an adhered simultaneously and can have adhesiveness and debonding capability both at high levels, because the tape or sheet has an adhesive face which is substantially smooth and includes at least one region composed of a first pressure-sensitive adhesive and at least one region composed of a pressure-sensitive adhesive other than the first pressure-sensitive adhesive.

These and other objects, features, and advantages of the present invention will be more fully understood from the following description of preferred embodiments with reference to the attached drawings. All numbers are herein assumed to be modified by the term "about."

Brief Description of Drawings

Fig. 1 is a schematic diagram illustrating a pressure-sensitive adhesive tape or sheet according to an embodiment of the present invention;

Fig. 2 is a schematic cross-sectional view of the pressure-sensitive adhesive tape or sheet according to the embodiment of the present invention;

Fig. 3 is a schematic diagram of a pressure-sensitive adhesive tape or sheet according to another embodiment of the present invention;

Fig. 4 is a schematic cross-sectional view of the pressure-sensitive adhesive tape or sheet according to the other embodiment of the present invention;

Fig. 5 is a schematic view of a method for producing a pressure-sensitive adhesive sheet according to an embodiment of the present invention;

Fig. 6 is a schematic diagram illustrating an exemplary Step (1) of a method for producing a pressure-sensitive adhesive sheet according to an embodiment of the present invention;

Fig. 7 is a schematic plan view of a sheet obtained after the completion of Step (2) of a method for producing a pressure-sensitive adhesive sheet according to an embodiment of the present invention;

Fig. 8 is a schematic cross-sectional view of the sheet obtained after the completion of Step (2) of the method for producing a pressure-sensitive adhesive sheet according to the embodiment of the present invention;

Fig. 9 is a schematic plan view of a pressure-sensitive adhesive sheet obtained by a method for producing a pressure-sensitive adhesive sheet according to an embodiment of the present invention;

Fig. 10 is a schematic cross-sectional view of the pressure-sensitive adhesive sheet obtained by the method for producing a pressure-sensitive adhesive sheet according to the embodiment of the present invention;

Fig. 11 is a schematic plan view of a sheet obtained after the completion of Step (1) of a method for producing a pressure-sensitive adhesive sheet according to an embodiment employed in the Examples;

Fig. 12 is a schematic cross-sectional view of the sheet obtained after the completion of Step (1) of the method for producing a pressure-sensitive adhesive sheet according to the embodiment as employed in the Examples;

Fig. 13 is a schematic plan view of a sheet including the assemblage and being obtained after the completion of Step (2) of the method for producing a pressure-sensitive adhesive sheet according to the embodiment employed in the Examples;

Fig. 14 is a schematic cross-sectional view of the sheet including the assemblage and being obtained after the completion of Step (2) of the method for producing a pressure-sensitive adhesive sheet according to the embodiment employed in the Examples;

Fig. 15 is a schematic plane view of a pressure-sensitive adhesive sheet according to Example 1;

Fig. 16 is a schematic cross-sectional view of the pressure-sensitive adhesive sheet according to Example 1;

Fig. 17 is a schematic plane view of a pressure-sensitive adhesive sheet according to Comparative Example 1;

Fig. 18 is a schematic cross-sectional view of the pressure-sensitive adhesive sheet according to Comparative Example 1;

Fig. 19 is a schematic plan view of a multilayer pressure-sensitive adhesive sheet according to Comparative Example 4;

Fig. 20 is a schematic cross-sectional view of the multilayer pressure-sensitive adhesive sheet according to Comparative Example 4;

Fig. 21 is a schematic plane view of a pressure-sensitive adhesive sheet according to Comparative Example 5; and

Fig. 22 is a schematic cross-sectional view of the pressure-sensitive adhesive sheet according to Comparative Example 5.

Description of Embodiments

A pressure-sensitive adhesive tape or sheet (tacky adhesive tape or sheet) according to an embodiment of the present invention has at least one adhesive face which is substantially smooth and which includes at least one region composed of a first pressure-sensitive adhesive (first tacky adhesive, first pressure-sensitive adhesive unit) and at least one region composed of a pressure-sensitive adhesive other than the first pressure-sensitive adhesive (tacky adhesive other than the first tacky adhesive, pressure-sensitive adhesive unit other than the first pressure-sensitive adhesive). As used herein "other pressure-sensitive adhesive than the first pressure-sensitive adhesive" are also referred to as "other pressure-sensitive adhesive(s) (other tacky adhesive(s), other pressure-sensitive adhesive unit(s))." In the pressure-sensitive adhesive tape or sheet, an "adhesive face being substantially smooth and including at least one region composed of a first pressure-sensitive adhesive and at least one region composed of a pressure-sensitive adhesive other than the first pressure-sensitive adhesive" is also referred to as a "specific adhesive face." As used herein the term "pressure-sensitive adhesive composition" refers to a composition for the formation of a pressure-sensitive adhesive and also means and includes a "composition for the formation of a pressure-sensitive adhesive and/or a pressure-sensitive adhesive layer."

Specifically, the pressure-sensitive adhesive tape or sheet according to the present invention (hereinafter also simply referred to as the "pressure-sensitive adhesive tape or sheet") has at least one specific adhesive face which is an adhesive face being substantially smooth and including at least one region composed of the first pressure-sensitive adhesive and at least one region composed of the other pressure-sensitive adhesive.

The specific adhesive face of the pressure-sensitive adhesive tape or sheet is provided by a pressure-sensitive adhesive layer which includes two or more different pressure-sensitive adhesives (pressure-sensitive adhesive units), in which the two or more different pressure-sensitive adhesives are each exposed from a layer surface serving as a specific adhesive face. The specific adhesive face includes two or more regions respectively composed of the pressure-sensitive adhesive, and there are two or more different types of such regions. In addition, pressure-sensitive adhesives constituting (two) adjacent regions are different from each other. The specific adhesive face of the pressure-sensitive adhesive tape or sheet having this configuration exhibits both satisfactory adhesiveness and satisfactory debonding capability. The "pressure-sensitive adhesive layer which includes two or more different pressure-sensitive adhesives, in which the two or more different pressure-sensitive adhesives are each exposed from the layer surface serving as the specific adhesive face" is hereinafter also referred to as a "specific pressure-sensitive adhesive layer."

Specifically, the specific pressure-sensitive adhesive layer is a pressure-sensitive adhesive layer which includes two or more different pressure-sensitive adhesive units, in which the respective pressure-sensitive adhesive units are exposed from the layer surface serving as the specific adhesive face.

The pressure-sensitive adhesive tape or sheet is in the form of a sheet or tape, and may be wound as a roll or may be a stack of sheets. Hereinafter such a "tape or sheet" is also simply referred to as a "tape" or "sheet." Likewise, a "pressure-sensitive adhesive tape or sheet" is also simply referred to as a "pressure-sensitive adhesive sheet" or "pressure-sensitive adhesive tape."

The pressure-sensitive adhesive sheet may be a double-coated pressure-sensitive adhesive sheet having adhesive faces as both surfaces, or may be a single-coated pressure-sensitive adhesive sheet having an adhesive face as one surface thereof. In a preferred embodiment, the pressure-sensitive adhesive sheet is a double-coated pressure-sensitive adhesive sheet. This is because the pressure-sensitive adhesive sheet is advantageously used for affixing articles to each other with the interposition of the pressure-sensitive adhesive sheet or for fixing a part (component) at a specific position. The pressure-sensitive adhesive sheet, when being a double-coated pressure-sensitive adhesive sheet, may have specific adhesive faces as both surfaces thereof or may have a specific adhesive face as only one of surfaces thereof.

The pressure-sensitive adhesive sheet may be a substrate-supported pressure-sensitive adhesive sheet including a substrate and, present on at least one side thereof, a pressure-sensitive adhesive layer or may be a substrate-less pressure-sensitive adhesive sheet including a pressure-sensitive adhesive layer alone. The pressure-sensitive adhesive sheet is particularly preferably a substrate-less pressure-sensitive adhesive sheet.

The pressure-sensitive adhesive sheet has at least one specific adhesive face. The specific adhesive face includes at least one region composed of the first pressure-sensitive adhesive and at least one region composed of the other pressure-sensitive adhesive. The region(s) composed of the other pressure-sensitive adhesive is not limited, as long as being the region composed of the pressure-sensitive adhesive other than the first pressure-sensitive adhesive. The region(s) may be the region(s) composed of a second pressure-sensitive adhesive; the regions composed of a second pressure-sensitive adhesive and a third pressure-sensitive adhesive, respectively; or regions composed of three or more different pressure-sensitive adhesives respectively. Typically, the specific adhesive face may be an adhesive face including the region(s) composed of a first pressure-sensitive adhesive and the region(s) composed of a second pressure-sensitive adhesive; an adhesive face including the region(s) composed of a first pressure-sensitive adhesive, the region(s) composed of a second pressure-sensitive adhesive, and the region(s) composed of a third pressure-sensitive adhesive; or an adhesive face including the region(s) composed of the first pressure-sensitive adhesive and three or more different regions respectively composed of three or more other pressure-sensitive adhesives.

In the specific adhesive face, the number of types of pressure-sensitive adhesives constituting regions is not limited, as long as being 2 or more. However, excessively many types of pressure-sensitive adhesives, if used, may adversely affect the productivity of the pressure-sensitive adhesive sheet and may impede balancing between adhesiveness and debonding capability of the specific adhesive face. To avoid these, two or three types of pressure-sensitive adhesives for constituting regions are preferably used. Specifically, in a preferred embodiment, the specific adhesive face is an adhesive face including the region(s) composed of a first pressure-sensitive adhesive and the region(s) composed of a second pressure-sensitive adhesive; or is an adhesive face including the region(s) composed of a first pressure-sensitive adhesive, the region(s) composed of a second pressure-sensitive adhesive, and the region(s) composed of a third pressure-sensitive adhesive.

Though not limited, exemplary shapes of regions composed of the pressure-sensitive adhesive in the specific adhesive face include stripe shapes (line shapes or banded shapes) such as a stripe shape extending in the longitudinal direction (machine direction) of the sheet or a stripe shape extending in the cross direction (width direction) of the sheet; grid shapes; dot-like shapes (polka dot patterns); checkered patterns (checkered flag patterns); and shapes each including two or more of these shapes simultaneously. Among them, the regions composed of the pressure-sensitive adhesive preferably each have a stripe shape and more preferably each have a stripe shape extending in the longitudinal direction of the sheet.

Specifically, in the specific adhesive face of the pressure-sensitive adhesive sheet, the region(s) composed of the first pressure-sensitive adhesive and the region(s) composed of the other pressure-sensitive adhesive are preferably in the form of stripes and more preferably are in the form of longitudinal stripes of the sheet, from the viewpoint of productivity.

In the specific adhesive face, the number of the region composed of the pressure-sensitive adhesive (the total of the number of the region composed of the first pressure-sensitive adhesive and the number of the region composed of the other pressure-sensitive adhesive) is not limited, as long as being 2 or more. However, the region composed of pressure-sensitive adhesive, if present in an excessively large number, may cause poor productivity. Typically, when the regions composed of the pressure-sensitive adhesive are in the form of longitudinal stripes of the sheet, the number of the region composed of the pressure-sensitive adhesive is preferably from 2 to 7, and more preferably from 3 to 5.

Accordingly, preferred embodiments of the pressure-sensitive adhesive tape for providing satisfactory productivity of the pressure-sensitive adhesive sheet and for more easy control of the balance between adhesiveness and debonding capability of the specific adhesive face are as follows. Specifically, in a preferred embodiment, the pressure-sensitive adhesive sheet has an adhesive face which includes at least one region composed of a first pressure-sensitive adhesive and at least one region composed of a second pressure-sensitive adhesive, in which the regions composed of the pressure-sensitive adhesive are in the form of longitudinal stripes of the sheet, and the number of the region composed of the pressure-sensitive adhesive is from 3 to 5. In another preferred embodiment, the pressure-sensitive adhesive sheet has an adhesive face which includes regions respectively composed of a first pressure-sensitive adhesive, a second pressure-sensitive adhesive, and a third pressure-sensitive adhesive, in which the regions composed of the pressure-sensitive adhesive are in the form of longitudinal stripes of the sheet, and the number of the region composed of the pressure-sensitive adhesive is from 3 to 5.

The specific adhesive face is substantially smooth. In the specific adhesive face, all the regions composed of the pressure-sensitive adhesive are in contact with one another in the plane direction and are flush with each other without any level difference or bump between adjacent regions composed of the pressure-sensitive adhesive. Specifically, the specific adhesive face of the pressure-sensitive adhesive sheet is provided by two or more different pressure-sensitive adhesives but has substantially no level difference (bump) between regions composed of the pressure-sensitive adhesive providing the adhesive face.

As used herein the phrase "the specific adhesive face of the pressure-sensitive adhesive sheet has no level difference between adjacent regions (level difference between pressure-sensitive adhesives)" means that the level difference, if any, is 10 $\mu$m or less (preferably 5 $\mu$m or less). Specifically, the specific adhesive face of the pressure-sensitive adhesive sheet has a level difference between adjacent regions composed of pressure-sensitive adhesives of preferably 10 $\mu$m or less. The size (magnitude) of such level difference may be determined through measurement on an electron micrograph of the cross section of the pressure-sensitive adhesive sheet or through measurement with a surface roughness tester (surface profiler).

The pressure-sensitive adhesive sheet has a smooth specific adhesive face, whereby allows two or more different pressure-sensitive adhesives to be in contact with an adherend simultaneously without a special operation and allows the respective pressure-sensitive adhesives to exhibit satisfactory actions or functions simultaneously.

Though not critical, the specific adhesive face of the pressure-sensitive adhesive sheet has a bond strength (90-degree peel strength, measurement temperature: 23°C, peel direction: 90°, tensile speed: 50 mm/min, sheet width: 30 mm, with respect to a polycarbonate plate) of preferably 20 N/30 mm or more, from the viewpoint of exhibiting a high dry bond strength during bonding with an adherend. Specifically, the specific adhesive face of the pressure-sensitive adhesive sheet has a bond strength of preferably from 20 to 50 N/30 mm, and more preferably from 20 to 40 N/30 mm. The specific adhesive face, if having an excessively high bond strength, may adversely affect the debonding capability of the pressure-sensitive adhesive sheet.

Examples of the first pressure-sensitive adhesive and the other pressure-sensitive adhesive in the pressure-sensitive adhesive sheet include, but are not limited to, acrylic pressure-sensitive adhesives, rubber pressure-sensitive adhesives, vinyl alkyl ether pressure-sensitive adhesives, silicone pressure-sensitive adhesives, polyester pressure-sensitive adhesives, polyamide pressure-sensitive adhesives, urethane pressure-sensitive adhesives, fluorine-containing pressure-sensitive adhesives, and epoxy pressure-sensitive adhesives; as well as mixed pressure-sensitive adhesives each composed of two or more of such pressure-sensitive adhesives. The first pressure-sensitive adhesive and the other pressure-sensitive adhesive may be pressure-sensitive adhesives of an identical type, as long as having different compositions. Typically, it is acceptable that the first pressure-sensitive adhesive is an acrylic pressure-sensitive adhesive containing a thermal blowing agent, and the second pressure-sensitive adhesive is an acrylic pressure-sensitive adhesive containing microparticles.

Of such pressure-sensitive adhesives, acrylic pressure-sensitive adhesives are preferred as the first pressure-sensitive adhesive and the other pressure-sensitive adhesive, typically for preventing adherend contamination, providing satisfactory transparency, and exhibiting good weather resistance.

Pressure-sensitive adhesive compositions for the formation of the first pressure-sensitive adhesive and the other pressure-sensitive adhesive may each be those of any form, such as active-energy-ray-curable compositions, thermosetting compositions, solvent-borne (solution-type) compositions, emulsions, and hot-melt compositions. Specifically, the pressure-sensitive adhesive compositions for the formation of the first pressure-sensitive adhesive and the other pressure-sensitive adhesive may be pressure-sensitive adhesive compositions each containing a base polymer as an essential component; or pressure-sensitive adhesive compositions each containing a mixture of monomers for the formation of a base polymer (hereinafter also referred to as a "monomer mixture") or a partial polymer of the monomer mixture as an essential component. As used herein the term "monomer mixture" refers to a mixture including only monomer components for the formation of a base polymer. Also as used herein the term "partial polymer" refers to a composition corresponding to a monomer mixture, except that one or more of components constituting the monomer mixture are partially polymerized.

In particular, the pressure-sensitive adhesive compositions are preferably thermosetting pressure-sensitive adhesive compositions each containing a monomer mixture or a partial polymer thereof, and a thermal initiator (thermal polymerization initiator) as essential components, or active-energy-ray-curable pressure-sensitive adhesive compositions each containing a monomer mixture or a partial polymer thereof, and a photoinitiator (photo-polymerization initiator) as essential components. These are preferred from the viewpoints of environment and workability during producing of the pressure-sensitive adhesive sheet. The pressure-sensitive adhesive compositions are more preferably active-energy-ray-curable pressure-sensitive adhesive compositions each containing a monomer mixture or a partial polymer thereof, and a photoinitiator as essential components, for a shorter polymerization time.

Though not critical, the content of the monomer mixture or a partial polymer thereof as an essential component in each pressure-sensitive adhesive composition is preferably 50 percent by weight or more (e.g., from 50 to 90 percent by weight), and more preferably 60 percent by weight or more (e.g., from 60 to 90 percent by weight), based on the total weight of the pressure-sensitive adhesive composition. This is because a pressure-sensitive adhesive composition, if containing the essential component in an excessively low content, may give a pressure-sensitive adhesive which fails to exhibit sufficient tackiness (adhesiveness) to an adherend.

As has been described above, the first pressure-sensitive adhesive and the other pressure-sensitive adhesive are preferably acrylic pressure-sensitive adhesives, and accordingly, the pressure-sensitive adhesive compositions are particularly preferably pressure-sensitive adhesive compositions each containing a monomer mixture containing an acrylic monomer (acrylic monomer mixture) or a partial polymer thereof as an essential component (acrylic pressure-sensitive adhesive compositions).

Preferred examples of the acrylic monomer include alkyl (meth)acrylates whose alkyl moiety (linearly-extending or branched-chain alkyl group) having 2 to 18 carbon atoms, of which alkyl (meth)acrylates whose alkyl moiety having 2 to 12 carbon atoms are more preferred, and alkyl (meth)acrylates whose alkyl moiety having 2 to 10 carbon atoms are furthermore preferred. As used herein the term "(meth)acrylate" refers "acrylate" and/or "methacrylate."

Exemplary alkyl (meth)acrylates whose alkyl moiety having 2 to 18 carbon atoms include ethyl (meth)acrylate, n-propyl (meth)acrylate, isopropyl (meth)acrylate, n-butyl (meth)acrylate, sec-butyl (meth)acrylate, t-butyl (meth)acrylate, n-octyl (meth)acrylate, isooctyl (meth)acrylate, 2-ethylhexyl (meth)acrylate, isononyl (meth)acrylate, dodecyl (meth)acrylate, and isostearyl (meth)acrylate. Each of different alkyl (meth)acrylates may be used alone or in combination. Among them, particularly preferred are alkyl (meth)acrylates whose alkyl moiety having 4 to 9 carbon atoms, such as 2-ethylhexyl (meth)acrylate, n-butyl (meth)acrylate, n-octyl (meth)acrylate, isooctyl (meth)acrylate, and isononyl (meth)acrylate.

The acrylic monomer mixture preferably contains the alkyl (meth)acrylate whose alkyl moiety having 2 to 18 carbon atoms as a principal component. Though not critical, the content of the alkyl (meth)acrylate whose alkyl moiety having 2 to 18 carbon atoms in the acrylic monomer mixture is preferably 50 percent by weight or more, more preferably 60 percent by weight or more, and furthermore preferably 80 percent by weight or more, based on the total amount of components constituting the monomer mixture.

The acrylic monomer mixture may further contain one or more copolymerizable monomers as components in addition to the acrylic monomer. The acrylic monomer mixture, when containing such copolymerizable monomer(s), may advantageously give a pressure-sensitive adhesive having a higher cohesive strength and showing more satisfactory adhesive properties such as tack strength (adhesive strength) and holding power. Each of different copolymerizable monomers may be used alone or in combination.

Examples of the copolymerizable monomers include carboxyl-containing monomers such as acrylic acid, methacrylic acid, carboxyethyl acrylate, carboxypentyl acrylate, itaconic acid, maleic acid, and crotonic acid; hydroxyl-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methyl acrylate; acid anhydride monomers such as maleic anhydride and itaconic anhydride; sulfo-containing monomers such as 2-acrylamide-2-methylpropanesulfonic acid and sulfopropyl acrylate; phosphate-containing monomers such as 2-hydroxyethylacryloyl phosphate; amide monomers including (meth)acrylamide, and N-substituted (meth)acrylamides such as N-methylolacrylamide; succinimide monomers such as N-(meth)acryloyloxymethylenesuccinimide, N-(meth)acryloyl-6-oxyhexamethylenesuccinimide, and N-(meth)acryloyl-8-oxyoctamethylenesuccinimide; vinyl monomers such as vinyl acetate, N-vinylpyrrolidone, N-vinylcarboxamides, styrene, and N-vinylcaprolactam; cyanoacrylate monomers such as acrylonitrile and methacrylonitrile; acrylic ester monomers such as glycidyl (meth)acrylate, tetrahydrofurfuryl (meth)acrylate, polyethylene glycol (meth)acrylates, polypropylene glycol (meth)acrylates, fluorine-containing (meth)acrylates, silicone (meth)acrylates, and 2-methoxyethyl acrylate; alkyl (meth)acrylates each having an alkyl moiety other than those of the alkyl (meth)acrylates whose alkyl moiety having 2 to 18 carbon atoms, such as methyl (meth)acrylate and nonadecyl (meth)acrylate; and alicyclic (meth)acrylates such as isobornyl (meth)acrylate.

When the acrylic monomer mixture contains one or more copolymerizable monomers as components thereof, the ratio (by weight) of the acrylic monomer to the copolymerizable monomer(s) is preferably from 50:50 to 99.9:0.1, more preferably from 70:30 to 99.5:0.5, and furthermore preferably from 85:15 to 99:1.

Of the copolymerizable monomers, hydroxyl-containing monomers and carboxyl-containing monomers are preferred, of which acrylic acid is more preferred. For a higher bond strength, the ratio (by weight) of the acrylic monomer to carboxyl-containing monomer(s) (of which acrylic acid is preferred) is preferably 85:15 to 99:1.

The first pressure-sensitive adhesive and the other pressure-sensitive adhesive in the pressure-sensitive adhesive sheet may each contain a thermal blowing agent. Namely, the first pressure-sensitive adhesive and the other pressure-sensitive adhesive may each be a pressure-sensitive adhesive containing a thermal blowing agent (thermal-blowing-agent-containing pressure-sensitive adhesive, thermal-blowing-agent-containing pressure-sensitive adhesive unit). Such a thermal-blowing-agent-containing pressure-sensitive adhesive, when heated, undergoes deformation (change in shape) due to expansion of the thermal blowing agent. The deformation of the pressure-sensitive adhesive helps the pressure-sensitive adhesive sheet to be peeled off at the specific adhesive face from an adherend and helps the pressure-sensitive adhesive sheet to have further satisfactory debonding capability (thermal debonding capability) and further satisfactorily separability from the adherend.

Of such thermal blowing agents, microcapsulated blowing agents are preferred. The thermal-blowing-agent-containing pressure-sensitive adhesive may contain two or more different thermal blowing agents.

Exemplary microcapsulated blowing agents include microspheres each composed of an elastic shell and, encapsulated therein, a material that easily gasifies and expands by heating, such as isobutane, propane, or pentane (hereinafter also referred to as "heat-expandable microspheres").

As used herein the term "material that easily gasifies and expands by heating" refers to a material that expands in its volume by the action of heat and refers to one capable of expanding in volume as large as 5 times or more the volume before heating. The material is preferably one capable of expanding in volume as large as 10 times or more the volume before heating.

The shell of the heat-expandable microspheres is often formed from a thermoplastic material, heat-fusible (hot-melt) material, or a material that breaks as a result of thermal expansion. Exemplary materials for constituting the shell of the heat-expandable microspheres include vinylidene chloride-acrylonitrile copolymers, poly(vinyl alcohol)s, poly(vinyl butyral)s, poly(methyl methacrylate)s, polyacrylonitriles, poly(vinylidene chloride)s, and polysulfones. The heat-expandable microspheres may be prepared according to a common procedure, such as coacervation or interfacial polymerization.

The heat-expandable microspheres are also available as commercial products. Exemplary commercially available heat-expandable microspheres usable as the blowing agent include, but are not limited to, products supplied by Matsumoto Yushi-Seiyaku Co., Ltd. under the trade names of "Matsumoto Microsphere F-30", "Matsumoto Microsphere F-50", "Matsumoto Microsphere F-80S", and "Matsumoto Microsphere F-85"; and products supplied by Expancel (a part of AkzoNobel NV) under the trade names of "EXPANCEL Du."

Though not critical, the heat-expandable microspheres have an average particle size of preferably from 1 to 80 $\mu$m, and more preferably from 3 to 50 $\mu$m, so that the heat-expandable microspheres satisfactorily disperse and form a thin layer.

Exemplary thermal blowing agents other than the heat-expandable microspheres include various inorganic blowing agents and organic blowing agents. Typical examples of inorganic blowing agents include ammonium carbonate, ammonium hydrogen carbonate, sodium hydrogen carbonate, ammonium nitrite, sodium borohydride, and azides. Typical examples of organic blowing agents include water; chlorofluoroalkanes such as trichloromonofluoromethane and dichloromonofluoromethane; azo compounds such as azobisisobutyronitrile, azodicarbonamide, and barium azodicarboxylate; hydrazine compounds such as p-toluenesulfonyl hydrazide, diphenylsulfone-3,3'-disulfonyl hydrazide, 4,4'-oxybis(benzenesulfonyl hydrazide), and allylbis(sulfonyl hydrazide); semicarbazide compounds such as p-toluylenesulfonyl semicarbazide and 4,4'-oxybis(benzenesulfonyl semicarbazide); triazole compounds such as 5-morpholyl-2,2,3,4-thiatriazole; N-nitroso compounds and N,N'-dinitrosopentamethylenetetramine and N,N'-dimethyl-N,N'-dinitrosoterephtalamide.

The content of thermal blowing agents in the thermal-blowing-agent-containing pressure-sensitive adhesive is not critical. However, the thermal-blowing-agent-containing pressure-sensitive adhesive, if containing thermal blowing agents in an excessively low contact, may not satisfactorily deform by heating and may thereby adversely affect the separability of the pressure-sensitive adhesive sheet from an adherend. In contrast, the thermal-blowing-agent-containing pressure-sensitive adhesive, if containing thermal blowing agents in an excessively high content, may adversely affect the strength and adhesiveness of the thermal-blowing-agent-containing pressure-sensitive adhesive. To avoid these, the content of thermal blowing agents in a pressure-sensitive adhesive composition for the formation of the thermal-blowing-agent-containing pressure-sensitive adhesive (thermal-blowing-agent-containing pressure-sensitive adhesive composition) is typically preferably from 10 to 200 parts by weight, more preferably from 20 to 125 parts by weight, and furthermore preferably from 25 to 100 parts by weight, typically per 100 parts by weight of the monomer mixture.

The first pressure-sensitive adhesive and the other pressure-sensitive adhesive in the pressure-sensitive adhesive sheet may each further contain microparticles. In other words, each of the first pressure-sensitive adhesive and the other pressure-sensitive adhesive may be a pressure-sensitive adhesive containing microparticles (microparticle-containing pressure-sensitive adhesive, microparticle-containing pressure-sensitive adhesive unit). The pressure-sensitive adhesives, when containing microparticles, may have higher moduli of elasticity and may show satisfactory properties such as strength and workability.

Examples of the microparticles include, but are not limited to, particles of metals such as copper, nickel, aluminum, chromium, iron, and stainless steel, and particles of oxides of such metals; particles of carbides such as silicon carbide, boron carbide, and nitrogen carbide; particles of nitrides such as aluminum nitride, silicon nitride, and boron nitride; particles of ceramics typified by oxides such as alumina and zirconia; inorganic microparticles including microparticles typically of calcium carbide, aluminum hydroxide, glass, and silica; particles of naturally-occurring materials such as shirasu (a kind of volcanic debris) and sand; and particles of polymers such as polystyrenes, poly(methyl methacrylate)s, phenol resins, benzoguanamine resins, urea resins, silicone resins, nylons and other polyamides, polyesters, polyurethanes, polyethylenes, polypropylenes, and polyimides.

Exemplary microparticles further include hollow inorganic microspheres and hollow organic microspheres. Specifically, exemplary hollow inorganic microspheres include hollow balloons made of glass, such as hollow glass balloons; hollow balloons made of metallic compounds, such as hollow alumina balloons; and hollow balloons made of ceramics and porcelain, such as hollow ceramic balloons. Exemplary hollow organic microspheres include hollow balloons made from resins, such as hollow acrylic resin balloons and hollow poly(vinylidene chloride) balloons.

Exemplary commercially available hollow glass balloons include products supplied by Fuji Silysia Chemical Ltd. under the trade name of "Fuji Balloon" (glass microballoon); products supplied by Tokai Kogyo Co., Ltd. under the trade names of "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000"; and products supplied by Fine Balloon Limited Company under the trade name of "Silax Fine Balloon."

Of the microparticles, preferred are hollow inorganic microparticles, of which hollow glass balloons are more preferred, from the viewpoints of the weight of the component and the polymerization efficiency by the application of active energy rays typified by ultraviolet rays. Use of hollow glass balloons helps the pressure-sensitive adhesive to have a higher adhesive strength at elevated temperatures without adversely affecting other characteristic properties such as shear force and holding power (shear adhesion). Each of different types of microparticles may be used alone or in combination. Such microparticles may have been subjected to surface treatments such as treatments for reducing surface tension typically with silicone compounds or fluorine compounds.

Though not critical, the microparticles have a particle size (average particle diameter) of preferably from 1 to 500 $\mu$m, more preferably from 5 to 200 $\mu$m, furthermore preferably from 10 to 100 $\mu$m, and particularly preferably from 30 to 100 $\mu$m.

Though not critical, the microparticles have a specific gravity (true density) of preferably from 0.01 to 1.8 g/cm$^3$, and more preferably from 0.02 to 1.5 g/cm$^3$. The microparticles, if having a specific gravity of less than 0.01 g/cm$^3$, may not uniformly disperse in the pressure-sensitive adhesive composition, because they may undesirably float upon mixing with other components. Additionally, such microparticles may have an insufficient strength and may suffer from breakage. In contrast, the microparticles, if having a specific gravity of more than 1.8 g/cm$^3$, may have a low transmittance with respect to active energy rays typified by ultraviolet rays, and this may impair the efficiency in a photo-curing reaction. In addition, this may impair the workability, because of larger weight of the resulting pressure-sensitive adhesive tape. When used as the microparticles, hollow inorganic microparticles preferably have a true density of from 0.1 to 0.6 g/cm$^3$; and hollow organic microparticles preferably have a true density of from 0.01 to 0.05 g/cm$^3$.

The content of microparticles in the microparticle-containing pressure-sensitive adhesive is not critical. However, microparticles, if contained in an excessively low content, may not sufficiently help the microparticle-containing pressure-sensitive adhesive to have more satisfactory adhesiveness to an adherend. In contrast, microparticles, if contained in an excessively high content, may adversely affect the strength and adhesiveness of the microparticle-containing pressure-sensitive adhesive. To avoid these, a microparticle-containing pressure-sensitive adhesive composition for the formation of the microparticle-containing pressure-sensitive adhesive contains microparticles in a content of preferably from 1 to 15 parts by weight, more preferably from 3 to 13 parts by weight, and furthermore preferably from 5 to 11 parts by weight, typically per 100 parts by weight of the monomer mixture.

Particularly when at least one pressure-sensitive adhesive selected from the first pressure-sensitive adhesive and the other pressure-sensitive adhesive in the pressure-sensitive adhesive sheet is a microparticle-containing pressure-sensitive adhesive, the microparticle-containing pressure-sensitive adhesive may further contain bubbles. Specifically, the microparticle-containing pressure-sensitive adhesive may be a pressure-sensitive adhesive containing both microparticles and bubbles (bubble-bearing microparticle-containing pressure-sensitive adhesive). The microparticle-containing pressure-sensitive adhesive, when further containing bubbles, be a pressure-sensitive adhesive containing both microparticles and bubbles, and this helps the specific adhesive face to have more satisfactory conformability to an uneven surface of an adherend and to thereby show more satisfactory adhesiveness to the adherend.

The content of bubbles in the bubble-bearing microparticle-containing pressure-sensitive adhesive is not critical. However, bubbles, if contained in an excessively low content, may not exhibit sufficient effects thereof. In contrast, bubbles, if contained in an excessively high content, may cause bubbles penetrating the pressure-sensitive adhesive, and this may adversely affect the viscoelastic performance and appearance of the pressure-sensitive adhesive sheet. To avoid these, the pressure-sensitive adhesive contains bubbles in a content of preferably from 3 to 30 percent by volume, and more preferably from 13 to 22 percent by volume, based on the total volume of the pressure-sensitive adhesive.

Bubbles contained in the bubble-bearing microparticle-containing pressure-sensitive adhesive are basically preferably closed cells but may be a mixture of closed cells and semi-closed cells. Though not limited, the bubbles are generally spheroidal and are preferably spherical. The bubbles have an average size (diameter) of preferably from 1 to 1000 $\mu$m, more preferably from 10 to 500 $\mu$m, and furthermore preferably from 30 to 300 $\mu$m, though not critical.

Examples of a gas component (gaseous component constituting bubbles; hereinafter also referred to as a "bubble-constituting gas") contained in the bubbles include, but are not limited to, inert gases such as nitrogen, carbon dioxide, and argon gases; and other various gaseous components such as air. When a bubble-constituting gas is incorporated into the composition before carrying out a reaction such as a polymerization reaction, the bubble-constituting gas should be one that does not adversely affect the reaction. Nitrogen is preferably used as the bubble-constituting gas, because it is inert to such reactions and low in cost.

The bubble-bearing microparticle-containing pressure-sensitive adhesive preferably further contains a surfactant, so that the adhesion and frictional resistance between the microparticles and a base polymer are reduced, and the bubbles are stably and satisfactorily mixed in the adhesive. Examples of the surfactant include fluorochemical surfactants, silicone surfactants, nonionic surfactants, and ionic surfactants. Among them, fluorochemical surfactants are preferred, because they allow bubbles to be mixed satisfactorily and prevent the bubbles from coalescing. Of the fluorochemical surfactants, preferred are fluorochemical surfactants each having an oxy($C_2$-$C_3$) alkylene group and a fluorinated hydrocarbon group in the molecule; of which nonionic surfactants are more preferred from the viewpoint of dispersibility. The pressure-sensitive adhesive may contain only one fluorochemical surfactant or may contain two or more different fluorochemical surfactants in combination. Fluorochemical surfactants described in Japanese Unexamined Patent Application Publication (JP-A) No. 2008-12798 and Japanese Unexamined Patent Application Publication (JP-A) No. 2006-022189 may be preferably used as the fluorochemical surfactants.

The fluorochemical surfactants may also be commercially available products such as products supplied under the trade names of "FTERGENT 251" and "FTX-218" by NEOS Co., Ltd.; products supplied under the trade names of "Megafac F-477" and "Megafac F-470" by DIC Corporation; products supplied under the trade names of "Surflon S-381", "Surflon S-383", "Surflon S-393", "Surflon KH-20", and "Surflon KH-40" by AGC Seimi Chemical Co., Ltd.; products supplied under the trade names of "EFTOP EF-352" and "EFTOP EF-801" by JEMCO Inc. (now Mitsubishi Materials Electronic Chemicals Co., Ltd.); and products supplied under the trade name of "Unidyne TG-656" by Daikin Industries Ltd.

Though not critical, the content (solids content) of fluorochemical surfactants in the bubble-bearing microparticle-containing pressure-sensitive adhesive may be such that the content of fluorochemical surfactants in the corresponding pressure-sensitive adhesive composition is preferably from 0.01 to 2 parts by weight, more preferably from 0.03 to 1.5 parts by weight, and furthermore preferably from 0.05 to 1 parts by weight, typically per 100 parts by weight of the monomer mixture. Fluorochemical surfactants, if contained in a content of less than 0.01 parts by weight, may not sufficiently help bubbles to be mixed satisfactorily and to be contained in a sufficient amount in the pressure-sensitive adhesive composition. In contrast, fluorochemical surfactants, if contained in a content of more than 2 parts by weight, may adversely affect the adhesion performance of the resulting pressure-sensitive adhesive.

As is described above, the first pressure-sensitive adhesive and the other pressure-sensitive adhesive in the pressure-sensitive adhesive sheet are each preferably formed from a thermosetting pressure-sensitive adhesive composition or an active-energy-ray-curable pressure-sensitive adhesive composition. Polymerization initiators (e.g., thermal initiators and photoinitiators) to be contained in these pressure-sensitive adhesive compositions are not limited. The pressure-sensitive adhesive compositions may each contain two or more different polymerization initiators.

Pressure-sensitive adhesive compositions each containing one or more polymerization initiators (e.g., thermal initiators and photoinitiators) are preferably used in the formation of the first pressure-sensitive adhesive and the other pressure-sensitive adhesive. The resulting compositions are capable of utilizing a curing reaction by the action of heat or active energy rays. Accordingly, typically when the first pressure-sensitive adhesive and the other pressure-sensitive adhesive each contain a thermal blowing agent and/or microparticles, the pressure-sensitive adhesive compositions can be cured while containing the thermal blowing agent and/or microparticles as being mixed therewith to form pressure-sensitive adhesives. Thus, pressure-sensitive adhesives each structurally stably containing the thermal blowing agent and/or microparticles can be easily obtained.

Exemplary photoinitiators include, but are not limited to, benzoin ether photoinitiators, acetophenone photoinitiators, α-ketol photoinitiators, aromatic sulfonyl chloride photoinitiators, photoactive oxime photoinitiators, benzoin photoinitiators, benzil photoinitiators, benzophenone photoinitiators, ketal photoinitiators, and thioxanthone photoinitiators.

Specifically, exemplary benzoin ether photoinitiators include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Exemplary acetophenone photoinitiators include 2,2-diethoxyacetophenone, 2,2-dimethoxy-2-phenylacetophenone, 1-hydroxycyclohexyl phenyl ketone, 4-phenoxydichloroacetophenone, and 4-t-butyl-dichloroacetophenone. Examples of the α-ketol photoinitiators include 2-methyl-2-hydroxypropiophenone and 1-[4-(2-hydroxyethyl)-phenyl]-2-hydroxy-2-methylpropan-1-one. Exemplary aromatic sulfonyl chloride photoinitiators include 2-naphthalenesulfonyl chloride. The photoactive oxime photoinitiators include, for example, 1-phenyl-1,1-propanedione-2-(o-ethoxycarbonyl)-oxime. The benzoin photoinitiators include benzoin. Exemplary benzil photoinitiators include benzil. Exemplary benzophenone photoinitiators include benzophenone, benzoylbenzoic acid, 3,3'-dimethyl-4-methoxybenzophenone, polyvinylbenzophenones, and α-hydroxycyclohexyl phenyl ketone. Examples of the ketal photoinitiators include benzyl dimethyl ketal. Exemplary thioxanthone photoinitiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

Examples of the thermal initiators include azo thermal initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate, and 2,2'-azobis(N,N'-dimethyleneisobutylamidine) dihydrochloride; peroxide thermal initiators such as dibenzoyl peroxide and tert-butyl permaleate; and redox thermal initiators.

Though not critical, the content of photoinitiators, when contained in any of the pressure-sensitive adhesive compositions for the formation of the first pressure-sensitive adhesive and the other pressure-sensitive adhesive, is preferably from 0.001 to 5 parts by weight, more preferably from 0.01 to 5 parts by weight, and furthermore preferably from 0.05 to 3 parts by weight, typically per 100 parts by weight of the monomer mixture. Also though not critical, the content of thermal initiators, when contained in the compositions, may fall within such a range as to be usable as thermal initiators.

For activating photoinitiators, an active energy ray is applied. Exemplary active energy rays include ionizing radiations such as alpha rays, beta rays, gamma rays, neutron beams, and electron beams; and ultraviolet rays, of which ultraviolet rays are preferred. Conditions for the application of active energy rays, such as irradiation energy and irradiation period, are not particularly limited, as long as the photoinitiator is activated to cause a reaction of monomer components.

The pressure-sensitive adhesive compositions preferably further contain one or more multifunctional (meth) acrylates, so as to help the first pressure-sensitive adhesive and the other pressure-sensitive adhesive to have a higher cohesive strength as a result of crosslinking and to thereby have a higher bond strength to an adherend. The pressure-sensitive adhesive compositions may each contain two or more different multifunctional (meth)acrylates.

The multifunctional (meth)acrylates are not limited, as long as being compounds each containing one or more (meth)acryloyl groups and forming a crosslinked structure upon curing, such as compounds each having at least two (meth)acryloyl groups. Examples of such multifunctional (meth)acrylates include trimethylolpropane tri(meth)acrylate, tetramethylolmethane tetraacrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylates, polyester acrylates, urethane acrylates, and reactive hyperbranched polymers each having two or more terminal (meth)acryloyl groups [e.g., products under the trade names of "CN2300", "CN2301", and "CN2320" (supplied by SARTOMER COMPANY, INC.)]. As used herein the term "(meth) acryloyl group" refers to "acryloyl group" and/or "methacryloyl group", and the same is true for other descriptions.

The specific content of multifunctional (meth)acrylates, when contained in any of the pressure-sensitive adhesive compositions, is preferably from 0.001 to 5 parts by weight, more preferably from 0.001 to 3 parts by weight, and furthermore preferably from 0.01 to 2 parts by weight, typically per 100 parts by weight of the monomer mixture, though the preferred range of content may vary depending on the molecular weight and the number of functional groups, of the multifunctional (meth)acrylate. Multifunctional (meth)acrylates, if contained in a content of more than 5 parts by weight, may cause the pressure-sensitive adhesive to have an excessively high cohesive strength and to have a low bond strength (adhesive strength). In contrast, multifunctional (meth)acrylates, if contained in an excessively low content (e.g., less than 0.001 part by weight), may cause the pressure-sensitive adhesive to have an insufficient cohesive strength.

The first pressure-sensitive adhesive and the other pressure-sensitive adhesive may further contain various additives. Exemplary additives for use herein include crosslinking agents such as isocyanate crosslinking agents and epoxy crosslinking agents; (crosslinking) coagents; tackifiers such as rosin derivative resins, polyterpene resins, petroleum resins, and oil-soluble phenol resins; plasticizers; fillers; age inhibitors; and surfactants.

Though not critical, the first pressure-sensitive adhesive and the other pressure-sensitive adhesive each have a solvent-insoluble content (gel fraction) of preferably from 35 to 99 percent by weight, more preferably from 50 to 99 percent by weight, and furthermore preferably from 70 to 95 percent by weight. The pressure-sensitive adhesives, if having a solvent-insoluble content of less than 35 percent by weight, may have low moduli of elasticity, and this may impede peeling off of the adhesives through expansion. In contrast, the pressure-sensitive adhesives, if having a solvent-insoluble content of more than 99 percent by weight, may show poor wettability and may not bond to an adherend satisfactorily.

As used herein the term "solvent-insoluble content" of a pressure-sensitive adhesive refers to the "content of solvent-insoluble components" in the pressure-sensitive adhesive and is a value determined according to the following "method for measuring solvent-insoluble content of pressure-sensitive adhesive." When any of the first pressure-sensitive adhesive and the other pressure-sensitive adhesive contains one or more components insoluble in solvents, such as thermal blowing agents and microparticles, the "solvent-insoluble content" also includes the content of the components insoluble in solvents.

The solvent-insoluble content of a pressure-sensitive adhesive may be determined in the following manner. About 1 g of the pressure-sensitive adhesive is sampled and precisely weighed to measure the weight of the pressure-sensitive adhesive before immersion. Next, this sample is immersed in about 40 g of ethyl acetate for 7 days, and all components insoluble in ethyl acetate are recovered, dried at 130°C for 2 hours, and the dry weight of the insoluble components is determined. The determined dry weight is substituted into the following equation to calculate the solvent-insoluble content.

$$\text{Solvent-insoluble content (\%) of pressure-sensitive}$$
$$\text{adhesive} = [(\text{Dry weight of insoluble components})/(\text{Weight of}$$
$$\text{pressure-sensitive adhesive before immersion})] \times 100$$

In a preferred embodiment of the pressure-sensitive adhesive sheet, at least one pressure-sensitive adhesive selected from the first pressure-sensitive adhesive and the other pressure-sensitive adhesive is a pressure-sensitive adhesive containing a thermal blowing agent (thermal-blowing-agent-containing pressure-sensitive adhesive, thermal-blowing-agent-containing pressure-sensitive adhesive unit). This is preferred particularly for improving debonding capability while maintaining satisfactory adhesiveness to an adherend.

In a more preferred embodiment, the thermal-blowing-agent-containing pressure-sensitive adhesive is formed from a pressure-sensitive adhesive composition which contains, as a principal component, a monomer mixture mainly containing an alkyl (meth)acrylate whose alkyl moiety having 2 to 18 carbon atoms, or a partial polymer of the monomer mixture, and which further contains 0.001 to 5 parts by weight of a photoinitiator, 10 to 200 parts by weight of a thermal blowing agent, and 0.001 to 5 parts by weight of a multifunctional (meth)acrylate, per 100 parts by weight of the monomer mixture. This is preferred because adverse effects on the productivity and on the environment during producing of the pressure-sensitive adhesive tape are suppressed, the specific adhesive face shows further higher adhesiveness to an adherend, and the pressure-sensitive adhesive tape can be debonded from the adherend further satisfactorily.

Though not critical, the thermal-blowing-agent-containing pressure-sensitive adhesive has a solvent-insoluble content (gel fraction) of preferably from 35 to 99 percent by weight, more preferably from 50 to 99 percent by weight, and furthermore preferably from 70 to 95 percent by weight. This range is preferred so that the pressure-sensitive adhesive tape can be more satisfactorily separated from an adherend through heating and be more satisfactorily debonded through heating, while maintaining sufficient adhesiveness at the specific adhesive face to the adherend.

In another preferred embodiment, therefore, the thermal-blowing-agent-containing pressure-sensitive adhesive is formed from a pressure-sensitive adhesive composition containing a monomer mixture containing an alkyl (meth) acrylate whose alkyl moiety having 2 to 18 carbon atoms as a principal component, or a partial polymer of the monomer mixture; a photoinitiator; a thermal blowing agent; and a multifunctional (meth)acrylate and has a solvent-insoluble content of from 35 to 99 percent by weight. This allows the pressure-sensitive adhesive sheet to be more satisfactorily separated from an adherend through heating and to be more satisfactorily debonded through heating, while maintaining sufficient adhesiveness at the specific adhesive face to the adherend.

When at least one pressure-sensitive adhesive selected from the first pressure-sensitive adhesive and the other pressure-sensitive adhesive in the pressure-sensitive adhesive sheet is a thermal-blowing-agent-containing pressure-sensitive adhesive, a region or regions (the region) composed of the thermal-blowing-agent-containing pressure-sensitive adhesive occupies preferably 20% to 85% (percent by area), and more preferably 25% to 70%, of the total area of the specific adhesive face, though the area percentage is not critical. If the region composed of the thermal-blowing-agent-containing pressure-sensitive adhesive occupies less than 20% of the specific adhesive face, the pressure-sensitive adhesive sheet may show insufficient debonding capability. In contrast, if the region composed of the thermal-blowing-agent-containing pressure-sensitive adhesive occupies more than 85% of the specific adhesive face, the pressure-sensitive adhesive sheet may show insufficient adhesiveness.

In another preferred embodiment of the pressure-sensitive adhesive sheet, at least one pressure-sensitive adhesive selected from the first pressure-sensitive adhesive and the other pressure-sensitive adhesive is a pressure-sensitive adhesive containing microparticles (microparticle-containing pressure-sensitive adhesive, microparticle-containing pressure-sensitive adhesive unit). This allows the specific adhesive face to exhibit further satisfactory adhesiveness to an adherend.

In a more preferred embodiment, the microparticle-containing pressure-sensitive adhesive is formed from a pressure-sensitive adhesive composition which includes a monomer mixture containing the alkyl (meth)acrylate whose alkyl moiety having 2 to 18 carbon atoms or a partial polymer of the monomer mixture, a photoinitiator, microparticles, and a multifunctional (meth)acrylate. This is preferred because adverse effects on the productivity and on the environment during producing of the pressure-sensitive adhesive tape are suppressed, and the specific adhesive face shows further higher adhesiveness to an adherend.

When at least one pressure-sensitive adhesive selected from the first pressure-sensitive adhesive and the other pressure-sensitive adhesive in the pressure-sensitive adhesive sheet is a microparticle-containing pressure-sensitive adhesive, a region or regions (the region) composed of the microparticle-containing pressure-sensitive adhesive occupies preferably 15% to 80% (percent by area), and more preferably 30% to 70%, of the total area of the specific adhesive face, though the area percentage is not critical. If the region composed of the microparticle-containing pressure-sensitive adhesive occupies less than 15% of the specific adhesive face, this may adversely affect the adhesiveness of the pressure-sensitive adhesive sheet. In contrast, if the region composed of the microparticle-containing pressure-sensitive adhesive occupies more than 80% of the specific adhesive face, the pressure-sensitive adhesive sheet may have excessively strong adhesiveness, and this may adversely affect the debonding capability of the pressure-sensitive adhesive sheet.

In another embodiment, at least one pressure-sensitive adhesive selected from the first pressure-sensitive adhesive and the other pressure-sensitive adhesive may be a pressure-sensitive adhesive containing both a thermal blowing agent and microparticles (pressure-sensitive adhesive unit containing a thermal blowing agent and microparticles).

In a preferred embodiment, the first pressure-sensitive adhesive and the other pressure-sensitive adhesive are the thermal-blowing-agent-containing pressure-sensitive adhesive and the microparticle-containing pressure-sensitive adhesive, respectively, so that the pressure-sensitive adhesive sheet have adhesiveness and debonding capability both at further higher level. Specifically, in the preferred embodiment, the pressure-sensitive adhesive sheet has a specific adhesive face which includes at least one region composed of a thermal-blowing-agent-containing pressure-sensitive adhesive as the first pressure-sensitive adhesive (region composed of a thermal-blowing-agent-containing pressure-sensitive adhesive unit serving as the first pressure-sensitive adhesive unit); and at least one region composed of a microparticle-containing pressure-sensitive adhesive as the second pressure-sensitive adhesive (region composed of a microparticle-containing pressure-sensitive adhesive unit serving as the second pressure-sensitive adhesive unit).

Though not critical, the ratio of the region composed of a thermal-blowing-agent-containing pressure-sensitive adhesive to the region composed of a microparticle-containing pressure-sensitive adhesive, when both present in the specific adhesive face, is preferably from 20:80 to 85:15, and more preferably from 25:75 to 70:30. This range is preferred for satisfactory balance between the initial adhesiveness to an adherend and the thermal debonding capability through heating.

In an embodiment, the pressure-sensitive adhesive sheet has at least one pressure-sensitive adhesive layer (specific pressure-sensitive adhesive layer) which includes two or more different pressure-sensitive adhesives, in which the respective pressure-sensitive adhesives are exposed from the layer surface serving as a specific adhesive face. Though not critical, the specific pressure-sensitive adhesive layer has a thickness of preferably from 30 $\mu$m to 2000 $\mu$m, and more preferably from 50 $\mu$m to 1500 $\mu$m, for obtaining adhesiveness and debonding capability both at satisfactory levels.

The specific pressure-sensitive adhesive layer has a structure including the first pressure-sensitive adhesive and the other pressure-sensitive adhesive, in which the respective pressure-sensitive adhesives are exposed from the layer surface serving as a specific adhesive face. In a preferred embodiment, the specific pressure-sensitive adhesive layer has such a structure that the other pressure-sensitive adhesive is overlaid on the first pressure-sensitive adhesive (in other words, the first pressure-sensitive adhesive is embedded in the other pressure-sensitive adhesive). This allows easy formation of the structure including the respective pressure-sensitive adhesives being exposed from the layer surface serving as a specific adhesive face, and allows easy formation of a smooth specific adhesive face.

As is described above, the first pressure-sensitive adhesive and the other pressure-sensitive adhesive(s) are preferably the thermal-blowing-agent-containing pressure-sensitive adhesive and the microparticle-containing pressure-sensitive adhesive, respectively. Accordingly, the specific pressure-sensitive adhesive layer typically preferably has a structure including the thermal-blowing-agent-containing pressure-sensitive adhesive and the microparticle-containing pressure-sensitive adhesive, in which the microparticle-containing pressure-sensitive adhesive is overlaid on the thermal-blowing-agent-containing pressure-sensitive adhesive.

The specific pressure-sensitive adhesive layer may have a single-layer structure or multilayer structure. Of such structures, the specific pressure-sensitive adhesive layer preferably has a multilayer structure in which pressure-sensitive adhesives exposed from the specific adhesive face are partially overlaid on each other. This allows easy formation of the specific adhesive face and provides satisfactory productivity.

In the preferred embodiment of the pressure-sensitive adhesive sheet, at least one pressure-sensitive adhesive selected from the first pressure-sensitive adhesive and the other pressure-sensitive adhesive is a thermal-blowing-agent-containing pressure-sensitive adhesive, as is described above. Though not critical, the thermal-blowing-agent-containing pressure-sensitive adhesive has a thickness of preferably from 10 to 300 $\mu$m, and more preferably from 30 to 200 $\mu$m, from the viewpoints typically of adhesive properties and cost. The thermal-blowing-agent-containing pressure-sensitive adhesive may have a thickness identical to that of the specific pressure-sensitive adhesive layer. Two or more different thermal-blowing-agent-containing pressure-sensitive adhesives, when contained in the specific pressure-sensitive adhesive layer, may have an identical thickness to each other or different thicknesses. When two or more different thermal-blowing-agent-containing pressure-sensitive adhesives are contained in the specific pressure-sensitive adhesive layer, the thickness of the thermal-blowing-agent-containing pressure-sensitive adhesives may be defined as the thickness of a thermal-blowing-agent-containing pressure-sensitive adhesive having a largest thickness among them. When a thermal-blowing-agent-containing pressure-sensitive adhesive has a varying thickness, a maximum thickness thereof may be defined as the thickness of the thermal-blowing-agent-containing pressure-sensitive adhesive.

In the preferred embodiment of the pressure-sensitive adhesive sheet as is described above, at least one pressure-sensitive adhesive selected from the first pressure-sensitive adhesive and the other pressure-sensitive adhesive is a microparticle-containing pressure-sensitive adhesive. Though not critical, the microparticle-containing pressure-sensitive adhesive has a thickness of preferably from 30 to 2000 $\mu$m, and more preferably from 50 to 1500 $\mu$m. The microparticle-containing pressure-sensitive adhesive may have a thickness identical to that of the specific pressure-sensitive adhesive layer. Two or more different microparticle-containing pressure-sensitive adhesives, when contained in the specific pressure-sensitive adhesive layer, may have an identical thickness or different thicknesses. When two or more different microparticle-containing pressure-sensitive adhesives are contained in the specific pressure-sensitive adhesive layer, the thickness of the microparticle-containing pressure-sensitive adhesives may be defined as the thickness of a microparticle-containing pressure-sensitive adhesive having a largest thickness among them. When a microparticle-containing pressure-sensitive adhesive has a varying thickness, the thickness of the microparticle-containing pressure-sensitive adhesive may be defined as a maximum thickness thereof.

The pressure-sensitive adhesive sheet may be protected on its adhesive face by a separator. The separator for use herein is not limited, as long as having a smooth surface as at least one side thereof. Examples of such separators include separators each including a base (separator base) and, on at least one side thereof, a release layer formed from a release agent; low-adhesive bases composed typically of fluorocarbon polymers (e.g., polytetrafluoroethylenes, polychlorotrifluoroethylenes, poly(vinyl fluoride)s, poly(vinylidene fluoride)s, tetrafluoroethylene-hexafluoropropylene copolymers, and chlorofluoroethylene-vinylidene fluoride copolymers); and low-adhesive bases composed of nonpolar polymers (e.g., olefinic resins such as polyethylenes and polypropylenes).

Exemplary separator bases for the separators each including a base (separator base) and, on at least one side thereof, a release layer include plastic base films (synthetic resin films) such as polyester films (e.g., poly(ethylene terephthalate) films), olefinic resin films (e.g., polyethylene films and polypropylene films), poly(vinyl chloride) films, polyimide films, polyamide films (nylon films), and rayon films; papers such as woodfree paper, Japanese paper, kraft paper, glassine paper, synthetic paper, and topcoat paper; and composite bases (e.g., two- or three-layered composite bases) each composed of two or more layers of these bases typically through lamination or coextrusion. Among them, polyester films are preferred, of which poly(ethylene terephthalate) (PET) films are more preferred. Exemplary release agents for constituting the release layer include, but are not limited to, silicone release agents, fluorine-containing release agents, and long-chain alkyl release agents. Each of different release agents may be used alone or in combination.

The separator is preferably optically transparent. The separator has a thickness of preferably from 10 to 200 $\mu$m, and more preferably from 20 to 100 $\mu$m, for satisfactory strengths. The separator may have a single-layer structure or multilayer structure.

Though not critical, the surface roughness (arithmetic mean surface roughness Ra) of the Separator (particularly surface roughness of the surface to be in contact with the specific adhesive face) is preferably 1 $\mu$m or less, and more preferably 0.5 $\mu$m or less. Upon producing of the pressure-sensitive adhesive sheet, a highly smooth specific adhesive face can be easily obtained by applying a pressure-sensitive adhesive composition to a separator having a small surface roughness and subsequently forming a specific pressure-sensitive adhesive layer from the composition. The specific adhesive face of the pressure-sensitive adhesive sheet, when protected with such a separator having a small surface roughness, is protected from roughening during storage and can have a furthermore smooth specific adhesive face by transferring the (smooth) surface structure of the separator to the specific adhesive face.

As is described above, the pressure-sensitive adhesive sheet may be a substrate-supported pressure-sensitive adhesive sheet including a substrate and, on at least one side thereof, a pressure-sensitive adhesive layer. Exemplary substrates for use in the substrate-supported pressure-sensitive adhesive sheet include plastic base films (synthetic resin films) such as polyester films (e.g., poly(ethylene terephthalate) films), olefinic resin films (e.g., polyethylene films and polypropylene films), poly(vinyl chloride) films, polyimide films, polyamide films (nylon films), and rayon films; papers such as woodfree paper, Japanese paper, kraft paper, glassine paper, synthetic paper, and topcoat paper; and multilayered composite substrates (two- or three-layered composite substrates) each composed of two or more of these substrates typically through lamination or coextrusion. The substrate has a thickness of preferably from 10 to 200 $\mu$m, and more preferably from 20 to 100 $\mu$m, for satisfactory strengths.

The pressure-sensitive adhesive sheet, when being a double-coated (double-faced) pressure-sensitive adhesive sheet, may be a double-coated pressure-sensitive adhesive sheet having a specific adhesive face as only one surface thereof. In this case, examples of a pressure-sensitive adhesive layer providing an adhesive face other than the specific adhesive face include known pressure-sensitive adhesive layers such as acrylic pressure-sensitive adhesive layers, rubber pressure-sensitive adhesive layers, vinyl alkyl ether pressure-sensitive adhesive layers, silicone pressure-sensitive adhesive layers, polyester pressure-sensitive adhesive layers, polyamide pressure-sensitive adhesive layers, urethane pressure-sensitive adhesive layers, fluorine-containing pressure-sensitive adhesive layers, and epoxy pressure-sensitive adhesive layers; and pressure-sensitive adhesive layers each obtained from any of the pressure-sensitive adhesive compositions used for the formation of pressure-sensitive adhesives providing the specific adhesive face.

Certain embodiments of pressure-sensitive adhesive sheets according to the present invention will be illustrated below with reference to the drawings according to necessity. It should be noted, however, pressure-sensitive adhesive sheets according to the present invention are not limited to the following embodiments.

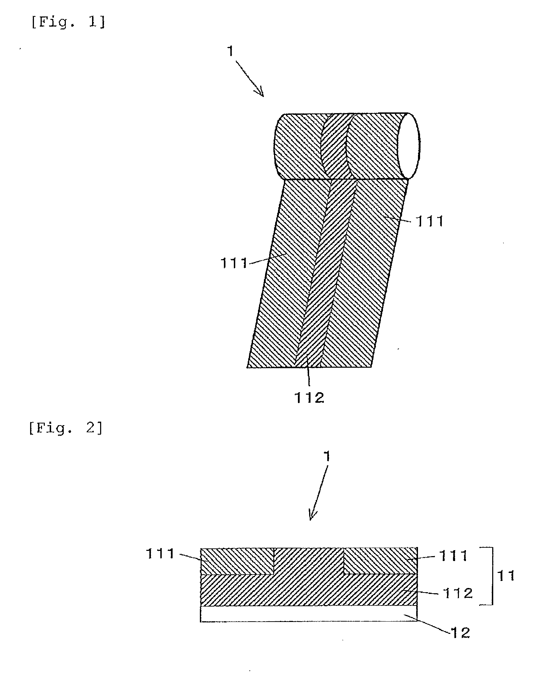

An embodiment of the pressure-sensitive adhesive sheet is illustrated in Fig. 1 and Fig. 2, in which Figs. 1 and 2 are a schematic diagram and a schematic cross-sectional view, respectively, of the pressure-sensitive adhesive sheet according to this embodiment. The pressure-sensitive adhesive sheet (pressure-sensitive adhesive tape) according to this embodiment has a specific adhesive face which includes three regions being composed of pressure-sensitive adhesives and being in the form of longitudinal stripes, in which, of the three regions, one common pressure-sensitive adhesive constitutes two lateral end regions, and another pressure-sensitive adhesive constitutes the remainder center region.

In Figs. 1 and 2, the reference signs "1" stands for a pressure-sensitive adhesive tape (pressure-sensitive adhesive sheet), "11" stands for a specific pressure-sensitive adhesive layer, "111" stands for a first pressure-sensitive adhesive (first pressure-sensitive adhesive unit), "112" stands for a second pressure-sensitive adhesive (second pressure-sensitive adhesive unit), and "12" stands for a separator. The first pressure-sensitive adhesive 111 and the second pressure-sensitive adhesive 112 are pressure-sensitive adhesives having different compositions from each other.

With reference to Fig. 1, the specific adhesive face of the pressure-sensitive adhesive tape 1 includes two regions composed of the first pressure-sensitive adhesive 111, and one region composed of the second pressure-sensitive adhesive 112. Thus, the specific adhesive face includes three regions composed of pressure-sensitive adhesives. In addition, the specific adhesive face of the pressure-sensitive adhesive tape 1 is substantially smooth as a whole, in which the regions composed of the first pressure-sensitive adhesive 111 and the region composed of the second pressure-sensitive adhesive 112 are flush with each other without level difference between them. The regions composed of pressure-sensitive adhesives in the specific adhesive face of the pressure-sensitive adhesive tape 1 are in the form of longitudinal stripes (longitudinal direction).

With reference to Fig. 2, the specific pressure-sensitive adhesive layer 11 of the pressure-sensitive adhesive tape 1 includes the first pressure-sensitive adhesive 111 and the second pressure-sensitive adhesive 112 and partially has a multilayer structure composed of the first pressure-sensitive adhesive 111 and the second pressure-sensitive adhesive 112. When the specific pressure-sensitive adhesive layer 11 of the pressure-sensitive adhesive tape 1 is seen from the specific adhesive face side, the second pressure-sensitive adhesive 112 is overlaid on the first pressure-sensitive adhesive 111. In the specific pressure-sensitive adhesive layer 11, the second pressure-sensitive adhesive 112 has a convex region, and the first pressure-sensitive adhesive 111 is positioned on both lateral sides of the convex region. The first pressure-sensitive adhesive 111 is a sheet-like pressure-sensitive adhesive without protrusions and depressions and has a thickness identical to that of the convex region of the second pressure-sensitive adhesive 112. The second pressure-sensitive adhesive 112 is a sheet-like pressure-sensitive adhesive which has, in the central area thereof, the convex region in the form of a line (stripe) extending in the longitudinal direction. In other words, the specific pressure-sensitive adhesive layer 11 of the pressure-sensitive adhesive tape 1 structurally includes the second pressure-sensitive adhesive 112 having, on one surface thereof, two longitudinal stripe-shaped concave regions arranged at both lateral ends in the cross direction; and the first pressure-sensitive adhesive 111 so as to be embedded in the concave regions. In addition, the specific pressure-sensitive adhesive layer 11 has a substantially flat (smooth) surface as the surface at which the first pressure-sensitive adhesive 111 is provided so as to be embedded in the concave regions. Further in other words, the specific pressure-sensitive adhesive layer 11 of the pressure-sensitive adhesive tape 1 structurally includes the second pressure-sensitive adhesive 112 and, provided on one side thereof, two portions of the first pressure-sensitive adhesive 111, in which the surface of the specific pressure-sensitive adhesive layer 11 at which the first pressure-sensitive adhesive 111 is provided is substantially smooth or flat.

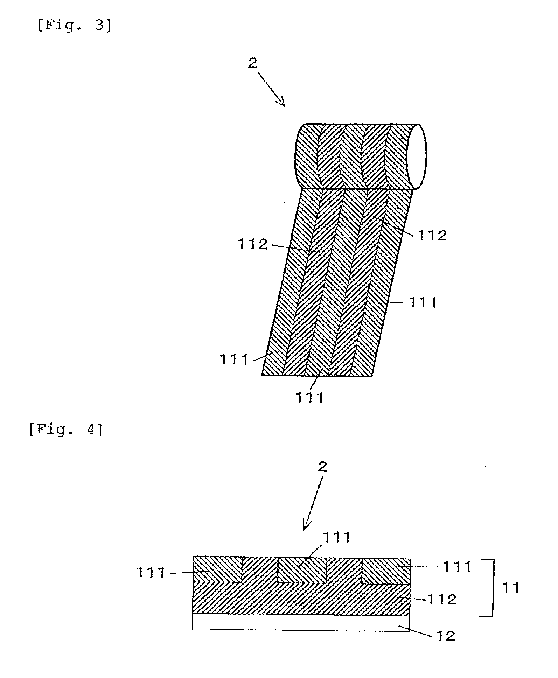

Another embodiment of the pressure-sensitive adhesive sheet is illustrated in Figs. 3 and 4. Figs. 3 and 4 are a schematic diagram and a schematic cross-sectional view of the pressure-sensitive adhesive sheet according to this embodiment. In Figs. 3 and 4, the reference signs "2" stands for a pressure-sensitive adhesive tape (pressure-sensitive adhesive sheet), "11" stands for a specific pressure-sensitive adhesive layer, "111" stands for a first pressure-sensitive adhesive, "112" stands for a second pressure-sensitive adhesive, and "12" stands for a separator. The specific pressure-sensitive adhesive layer 11 includes the first pressure-sensitive adhesive 111 and the second pressure-sensitive adhesive 112. The first pressure-sensitive adhesive 111 and the second pressure-sensitive adhesive 112 are pressure-sensitive adhesives having different compositions from each other.

The specific adhesive face of the pressure-sensitive adhesive tape 2 includes three regions composed of the first pressure-sensitive adhesive 111; and two regions composed of the second pressure-sensitive adhesive 112. Thus, the specific adhesive face includes five regions composed of pressure-sensitive adhesives. The specific adhesive face of the pressure-sensitive adhesive tape 2 includes two types of regions composed of pressure-sensitive adhesives. In addition, the specific adhesive face of the pressure-sensitive adhesive tape 2 is substantially smooth as a whole, in which the first pressure-sensitive adhesive 111 and the second pressure-sensitive adhesive 112 are flush with each other without level difference between them. The regions composed of pressure-sensitive adhesives in the specific adhesive face of the pressure-sensitive adhesive tape 2 are in the form of longitudinal stripes.

With reference to Fig. 4, the specific pressure-sensitive adhesive layer 11 of the pressure-sensitive adhesive tape 2 includes the first pressure-sensitive adhesive 111 and the second pressure-sensitive adhesive 112 and partially has a multilayer structure of the first pressure-sensitive adhesive 111 and the second pressure-sensitive adhesive 112. When the specific pressure-sensitive adhesive layer 11 of the pressure-sensitive adhesive tape 2 is seen from the specific adhesive face side, the second pressure-sensitive adhesive 112 is overlaid on the first pressure-sensitive adhesive 111. In the specific pressure-sensitive adhesive layer 11, the second pressure-sensitive adhesive 112 has convex regions, and the first pressure-sensitive adhesive 111 is positioned on both lateral sides of the convex regions. The first pressure-sensitive adhesive 111 is a sheet-like pressure-sensitive adhesive without protrusions and depressions and has a thickness identical to that of the convex regions of the second pressure-sensitive adhesive 112. The pressure-sensitive adhesive 112 is a sheet-like pressure-sensitive adhesive having two lengthwise linearly-extending convex regions. In other words, the specific pressure-sensitive adhesive layer 11 of the pressure-sensitive adhesive tape 2 structurally includes the second pressure-sensitive adhesive 112 having, on one surface thereof, concave regions at the center part and both ends in the cross direction, the concave regions being in the form of longitudinal stripes; and the first pressure-sensitive adhesive 111 provided so as to be embedded in the concave regions. In addition, the specific pressure-sensitive adhesive layer 11 has a substantially flat (smooth) surface as the surface at which the first pressure-sensitive adhesive 111 is provided so as to be embedded in the concave regions. Further in other words, the specific pressure-sensitive adhesive layer 11 of the pressure-sensitive adhesive tape 2 structurally includes the second pressure-sensitive adhesive 112; and, at one surface thereof, three stripes of the first pressure-sensitive adhesive 111 and has a substantially smooth surface as the surface of the specific pressure-sensitive adhesive layer 11 at which the first pressure-sensitive adhesive 111 is provided.

There have been described pressure-sensitive adhesive sheets such as the pressure-sensitive adhesive sheet 1 and the pressure-sensitive adhesive sheet 2, each having an adhesive face which includes at least one region composed of a first pressure-sensitive adhesive and at least one region composed of a second pressure-sensitive adhesive and which is substantially smooth, in which the region composed of the first pressure-sensitive adhesive and the region composed of the second pressure-sensitive adhesive are in the form of longitudinal stripes. In these pressure-sensitive adhesive sheets, the thickness of the first pressure-sensitive adhesive (e.g., the first pressure-sensitive adhesive 111) is not limited but is preferably from 10 to 300 $\mu$m, and more preferably from 30 to 200 $\mu$m; and the thickness (maximum thickness) of the second pressure-sensitive adhesive (e.g., the second pressure-sensitive adhesive 112) is not limited, but is preferably from 30 to 2000 $\mu$m, and more preferably from 50 to 1500 $\mu$m. In the adhesive face, though not critical, the width of one stripe of the first pressure-sensitive adhesive being in the form of a longitudinal stripe (width of one region composed of the first pressure-sensitive adhesive being in the form of a longitudinal stripe) is preferably from 1 mm to 500 mm, and more preferably from 3 mm to 250 mm. Also though not critical, the width of one stripe of the second pressure-sensitive adhesive being in the form of a longitudinal stripe in the adhesive face (width of one region composed of the second pressure-sensitive adhesive being in the form of a longitudinal stripe) is preferably from 1 mm to 500 mm, and more preferably from 3 to 250 mm in the cross direction.

The pressure-sensitive adhesive sheets such as the pressure-sensitive adhesive sheet 1 and the pressure-sensitive adhesive sheet 2 each have a width of preferably from 5 to 1000 mm, and more preferably from 10 to 500 mm, though not critical.

Pressure-sensitive adhesive sheets according to embodiments of the present invention may be produced by a method not limited, but are preferably produced by a produced method which includes Step 1 of providing a pressure-sensitive adhesive composition for the formation of a first pressure-sensitive adhesive, and a pressure-sensitive adhesive composition or compositions for the formation of other pressure-sensitive adhesive(s); and Step 2 of obtaining a pressure-sensitive adhesive tape or sheet which has an adhesive face being substantially smooth and including at least one region composed of the first pressure-sensitive adhesive; and at least one region composed of the pressure-sensitive adhesive other than the first pressure-sensitive adhesive. In a preferred embodiment, Step 2 is performed by subjecting the compositions to polymerization to obtain the pressure-sensitive adhesive tape or sheet which has an adhesive face being substantially smooth and including at least one region composed of the first pressure-sensitive adhesive and at least one region composed of the pressure-sensitive adhesive other than the first pressure-sensitive adhesive. The "pressure-sensitive adhesive composition for the formation of the first pressure-sensitive adhesive" is also referred to as the "first pressure-sensitive adhesive composition"; and the "pressure-sensitive adhesive composition for the formation of the other pressure-sensitive adhesive" is also referred to as the "other pressure-sensitive adhesive composition."

Each of pressure-sensitive adhesive compositions such as the first pressure-sensitive adhesive composition and the other pressure-sensitive adhesive composition may be prepared by selecting a base polymer or one or more monomer components for the formation of the base polymer, as well as a thermal blowing agent, microparticles, a polymerization initiator, additives, and other components according to necessity; and mixing them according to a known technique. A part of the monomer components may be polymerized according to necessity typically for viscosity control.

For example, a pressure-sensitive adhesive composition for the formation of a thermal-blowing-agent-containing pressure-sensitive adhesive (thermal-blowing-agent-containing pressure-sensitive adhesive composition) may be prepared by choosing monomer components, a thermal blowing agent, a polymerization initiator, additives, and other components according to necessity; and mixing them according to a known technique. Interpedently, a pressure-sensitive adhesive composition for the formation of a microparticle-containing pressure-sensitive adhesive (microparticle-containing pressure-sensitive adhesive composition) may be prepared by choosing monomer components, microparticles, a polymerization initiator, additives, and other components according to necessity; and mixing them according to a known technique.

An exemplary preparation of a pressure-sensitive adhesive composition will be described in detail below, by taking a preparation of a microparticle-containing pressure-sensitive adhesive composition as an example. However, preparation methods of such pressure-sensitive adhesive compositions are not limited to the exemplary preparation technique. Typically, the microparticle-containing pressure-sensitive adhesive composition may be prepared by (i) mixing monomer components for the formation of a base polymer with a photoinitiator to give a mixture (mixture of a monomer mixture with a photoinitiator); (ii) subjecting the mixture to a polymerization reaction with an active energy ray according to necessity (e.g., polymerization with an ultraviolet ray) to give a composition (syrup) in which only part of the monomer components is polymerized; (iii) and incorporating microparticles and, where necessary, additives into the resulting syrup. The microparticle-containing pressure-sensitive adhesive composition, when further containing bubbles, is prepared further by (iv) introducing bubbles into the blend obtained from Step (iii). As used herein the term "syrup" refers to a "composition in the form of a syrup."

Bubbles are preferably incorporated into the microparticle-containing pressure-sensitive adhesive composition as a last component as in the above preparation process, so as to incorporate bubbles stably into the composition and stably remain therein. A blend before being mixed with bubbles (e.g., the blend obtained from Step (iii)) preferably have a high viscosity so as to hold bubbles stably therein. Though not critical, the viscosity of the blend before being mixed with bubbles is typically preferably from 5 to 50 Pa·s, and more preferably from 10 to 40 Pa·s, as measured with a BH viscometer using a No. 5 rotor, at a number of revolutions of 10 rpm and a measurement temperature of 30°C. The blend, if having a viscosity of less than 5 Pa·s, may not satisfactorily hold bubbles due to its excessively low viscosity, and incorporated bubbles may immediately undergo coalescence to escape out of the system. In contrast, the blend, if having a viscosity of more than 50 Pa·s, may be unsuitable for the formation of a polymer layer by coating, due to its excessively high viscosity. The viscosity of the blend may be controlled typically by incorporating a polymer component such as an acrylic rubber or thickening additive; or by partially polymerizing monomer components for the formation of the base polymer.

Incorporation of bubbles into the blend may be performed by any known technique for mixing bubbles. An exemplary device for use herein is one that includes a stator and a rotor, in which the stator includes a disc having a through hole at the center part and a multiplicity of fine teeth arranged on the disc; and the rotor faces the stator and includes a disc and a multiplicity of fine teeth arranged on the disc so that the teeth of the rotor face the teeth of the stator. Using this device, the blend is introduced in between the teeth of the stator and the teeth of the rotor, and a gaseous component for constituting bubbles (bubble-constituting gas) is introduced through the through hole into the blend while rotating the rotor at high speed to allow the bubble-constituting gas to be finely divided and dispersed into the blend, to give a composition bearing finely divided, dispersed bubbles.

In a more preferred embodiment of the method for producing a pressure-sensitive adhesive sheet, Step 1 is performed so as to provide, on the separator, a pressure-sensitive adhesive composition for the formation of the first pressure-sensitive adhesive and a pressure-sensitive adhesive composition for the formation of the other pressure-sensitive adhesive. This is preferred because a highly smooth specific adhesive face is easily obtained while avoiding level difference between regions composed of pressure-sensitive adhesives in the specific adhesive face; oxygen, which will adversely affect polymerization reactions, in the air can be blocked; and the separator serves to protect an adhesive face of the resulting pressure-sensitive adhesive sheet.

Specifically, in the more preferred embodiment, the pressure-sensitive adhesive sheet is obtained by a producing method which includes Step 1 of providing on a separator a pressure-sensitive adhesive composition for the formation of a first pressure-sensitive adhesive, and a pressure-sensitive adhesive composition(s) for the formation of other pressure-sensitive adhesive(s); and Step 2 of obtaining the pressure-sensitive adhesive sheet having an adhesive face which is substantially smooth and which includes at least one region composed of the first pressure-sensitive adhesive and at least one region composed of the other pressure-sensitive adhesive.

In a preferred embodiment of the method for producing a pressure-sensitive adhesive sheet, Step 1 is a step of providing on part of the separator the pressure-sensitive adhesive composition for the formation of the first pressure-sensitive adhesive, and subsequently providing the at least one pressure-sensitive adhesive composition for the formation of the other pressure-sensitive adhesive(s) so as to lie on (overlay on) the pressure-sensitive adhesive composition for the formation of the first pressure-sensitive adhesive. This is preferred because the pressure-sensitive adhesive composition for the formation of the first pressure-sensitive adhesive and the pressure-sensitive adhesive composition for the formation of the other pressure-sensitive adhesive can be easily provided on the separator; and, by using the smoothness of the separator, a pressure-sensitive adhesive sheet having an adhesive face is prepared, which adhesive face is substantially smooth and includes at least one region composed of the first pressure-sensitive adhesive and at least one region composed of other pressure-sensitive adhesive.

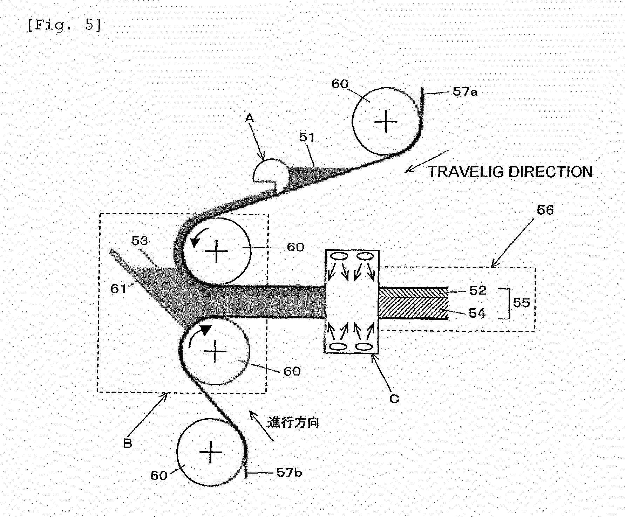

Methods for producing a pressure-sensitive adhesive sheet according to embodiments of the present invention will be illustrated below, with reference to the drawings according to necessity. Fig. 5 is a schematic view illustrating a method for producing a pressure-sensitive adhesive sheet, as an embodiment of the present invention.

The method for producing the pressure-sensitive adhesive sheet according to the embodiment includes the steps of: providing a pressure-sensitive adhesive composition for the formation of a first pressure-sensitive adhesive on part of a separator, and subsequently providing a pressure-sensitive adhesive composition for the formation of a second pressure-sensitive adhesive so as to lie on (overlay on) the pressure-sensitive adhesive composition for the formation of the first pressure-sensitive adhesive; and subjecting the compositions to polymerization to give a pressure-sensitive adhesive tape or sheet having an adhesive face which is substantially smooth and which includes at least one region composed of the first pressure-sensitive adhesive and at least one region composed of the second pressure-sensitive adhesive. Hereinafter the "pressure-sensitive adhesive composition for the formation of the second pressure-sensitive adhesive" is also referred to as the "second pressure-sensitive adhesive composition."

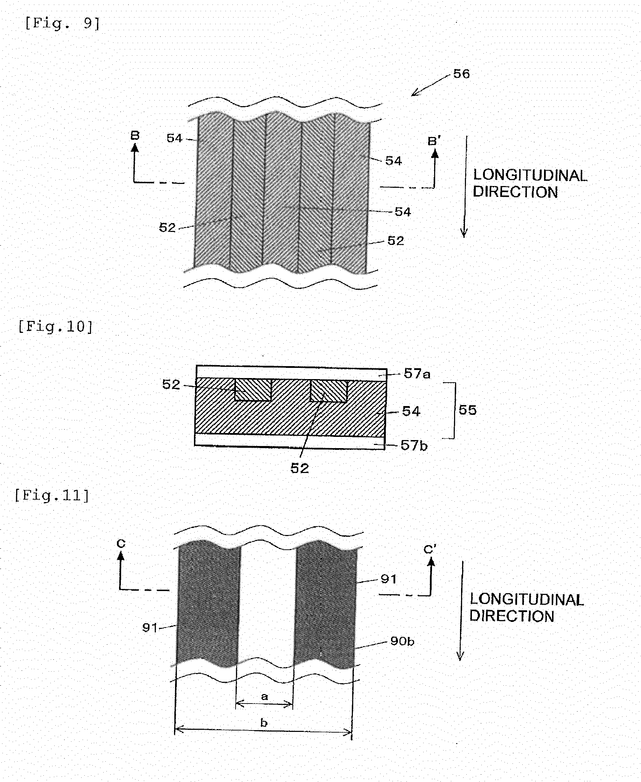

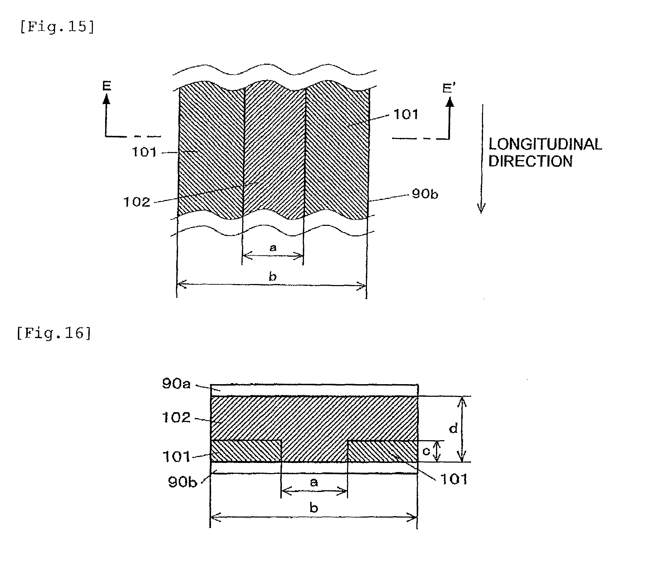

The method according to this embodiment gives a pressure-sensitive adhesive sheet having an adhesive face which is substantially smooth and which includes two or more regions composed of pressure-sensitive adhesives, in which the two or more regions composed of pressure-sensitive adhesives are of two types and are in the form of longitudinal stripes. The method according to this embodiment can give various types of pressure-sensitive adhesive sheets, such as a pressure-sensitive adhesive sheet as illustrated in Figs. 1 and 2, a pressure-sensitive adhesive sheet as illustrated in Figs. 3 and 4, a pressure-sensitive adhesive sheet as illustrated in Figs. 9 and 10, and a pressure-sensitive adhesive sheet as illustrated in Figs. 15 and 16.

In Fig. 5, the reference signs "A" stands for a roll knife coater, "B" stands for a two-roll coater, and "C" stands for a curing device (polymerization device). The reference signs "51" stands for a first pressure-sensitive adhesive composition, "52" stands for a first pressure-sensitive adhesive (first pressure-sensitive adhesive unit), "53" stands for a second pressure-sensitive adhesive composition, "54" stands for a second pressure-sensitive adhesive (second pressure-sensitive adhesive unit), "55" stands for a specific pressure-sensitive adhesive layer, "56" stands for a pressure-sensitive adhesive sheet, "57a" stands for a separator, "57b" stands for another separator, "60" stands for process rolls, and "61" stands for a sheathing board. In the pressure-sensitive adhesive sheet 56, a surface facing the separator 57a corresponds to a specific adhesive face. The traveling direction in Fig. 5 is a direction along which the separator travels. The separator 57a and the separator 57b are separators with smooth surfaces. The separator 57a and the separator 57b are often stored each as a roll wound on a core roll before use, and are unwound from the core roll upon use.

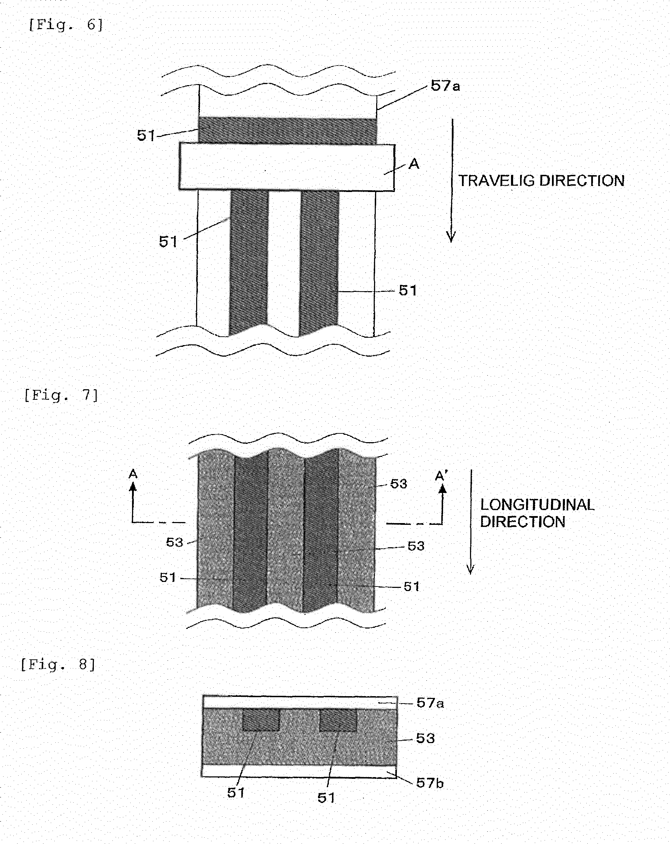

Initially, the separator 57a is unwound, on which a first pressure-sensitive adhesive composition is partially provided by the roll knife coater A (Step (1)). Fig. 6 is a plan view illustrating an embodiment of Step (1) of the method for producing a pressure-sensitive adhesive sheet according to this embodiment. In Fig. 6, the reference signs "A" stands for a roll knife coater, "51" stands for a first pressure-sensitive adhesive composition, and "57a" stands for a separator. The traveling direction in Fig. 6 refers to a direction along which the separator 57a travels. In Step (1) as illustrated in Fig. 6, the first pressure-sensitive adhesive composition is applied in the form of longitudinal stripes using the roll knife coater to thereby form on the separator 57a two stripes of the first pressure-sensitive adhesive composition extending in the longitudinal direction.

The roll knife coater A is designed to bridge part of its gap so as not to provide the first pressure-sensitive adhesive composition partially. In addition, the control of the gap regulates the thickness of the first pressure-sensitive adhesive composition. By choosing or controlling these conditions, the number, width, and thickness of the first pressure-sensitive adhesive 52 in the pressure-sensitive adhesive sheet 56 can be regulated.

Next, a second pressure-sensitive adhesive composition is provided by the two-roll coater B so as to lie on (overlay on) the first pressure-sensitive adhesive composition of the sheet obtained from Step 1 (Step (2)). The sheet obtained from Step 1 is a sheet including the separator 57a and, provided partially thereon, two stripes of the first pressure-sensitive adhesive composition extending in the longitudinal direction.

The two-roll coater B includes two process rolls 60, a sheathing board 61, and a reservoir (reservoir for the pressure-sensitive adhesive composition). In Step (2), the two-roll coater B brings a side of the sheet obtained from Step 1, which side bearing the first pressure-sensitive adhesive composition, into contact with the second pressure-sensitive adhesive composition in the reservoir and thereby introduces the second pressure-sensitive adhesive composition into between the separator 57a and the separator 57b so as to lie on (overlay on) the first pressure-sensitive adhesive composition. By regulating the distance between the two process rolls 60 in the two-roll coater B, the thickness of the second pressure-sensitive adhesive 54 in the pressure-sensitive adhesive sheet 56 can be controlled.

Figs. 7 and 8 are schematic diagrams of a multilayered sheet obtained after the completion of Step (2) of the method according to the embodiment. Figs. 7 and 8 are a schematic plan view (schematic plan view seen from the separator 57a side) and a schematic cross-sectional view (schematic cross-sectional view taken along line A-A' in Fig. 7), respectively, of the multilayered sheet obtained after the completion of Step (2) of the method according to the embodiment. In Figs. 7 and 8, the reference signs "51" stands for a first pressure-sensitive adhesive composition, "53" stands for a second pressure-sensitive adhesive composition, "57a" stands for a separator, and "57b" stands for another separator. The sheet illustrated in Fig. 7 has the separator 57a on its surface, but the separator 57a is not shown in the figure.

The ratio between the region composed of the first pressure-sensitive adhesive and the region composed of the second pressure-sensitive adhesive at the specific adhesive face of the prepared pressure-sensitive adhesive sheet 56 can be easily controlled by regulating the width(s) of portion(s) in which the gap of the roll knife coater A is bridged in Step (1) so as to control the width and number of the first pressure-sensitive adhesive composition unit; and/or by regulating the width of the second pressure-sensitive adhesive composition to lie on (overlay on) the first pressure-sensitive adhesive composition in Step (2).

Finally, the above-obtained multilayered sheet (multilayered sheet obtained after the completion of Step (2), see Figs. 7 and 8) is subjected to polymerization by the curing device C to cure the first pressure-sensitive adhesive composition and the second pressure-sensitive adhesive composition to thereby form the first pressure-sensitive adhesive and the second pressure-sensitive adhesive, respectively, whereby obtaining a pressure-sensitive adhesive sheet having an adhesive face which is substantially smooth and which includes at least one region composed of the first pressure-sensitive adhesive and at least one region composed of the second pressure-sensitive adhesive (Step (3)).

Examples of the curing device C include, but are not limited to, active energy ray irradiators (of which ultraviolet irradiators and X-ray irradiators are typically preferred), heating devices, and devices each having both an active energy ray irradiating function and a heating function. Among them, active energy ray irradiators and devices having both an active energy ray irradiating function and a heating function are preferred as the curing device C. This is because the method for producing a pressure-sensitive adhesive sheet preferably adopts a photopolymerization technique so as to provide satisfactory workability, good environmental friendliness, and short polymerization time. When Step (3) further includes a drying step, a device having both an active energy ray irradiating function and a heating function is preferably used.

The irradiation with an active energy ray in Step (3) may be performed under any conditions, as long as the pressure-sensitive adhesive compositions are sufficiently cured, and the irradiance and irradiation time are appropriately choosable. Typically, the irradiation with an active energy ray may be performed at an irradiance typically of from 10 to 3000 mJ/cm$^2$, while the irradiance may vary depending on the process speed, the compositions (formulations) of the pressure-sensitive adhesive compositions, and the thicknesses of the pressure-sensitive adhesive compositions.

Figs. 9 and 10 are schematic diagrams illustrating a pressure-sensitive adhesive sheet obtained after the completion of Step (3) of the method according to the embodiment. Figs. 9 and 10 are a schematic plan view (plan view seen from the separator 57a side, plan view of the specific adhesive face side) and a schematic cross-sectional view (schematic cross-sectional view taken along line B-B' in Fig. 9), respectively, of the pressure-sensitive adhesive sheet obtained after the completion of Step (3) of the method according to the embodiment. The reference sings "52" stands for a first pressure-sensitive adhesive, "54" stands for a second pressure-sensitive adhesive, "55" stands for a specific pressure-sensitive adhesive layer, "56" stands for a pressure-sensitive adhesive sheet, "57a" stands for a separator, and "57b" stands for another separator. This pressure-sensitive adhesive sheet is a double-coated pressure-sensitive adhesive sheet, in which the surface facing the separator 57a is a specific adhesive face. The pressure-sensitive adhesive sheet illustrated in Fig. 9 has the separator 57a on its surface, but the separator 57a is not shown in the figure.

The pressure-sensitive adhesive sheet 56 has an adhesive face mentioned below. The adhesive face is an adhesive face (i) which is substantially smooth without level difference between regions composed of pressure-sensitive adhesives; and (ii) which includes five regions composed of pressure-sensitive adhesives and being in the form of longitudinal stripes, the five regions including two regions composed of the first pressure-sensitive adhesive and being in the form of longitudinal stripes, and three regions composed of the second pressure-sensitive adhesive and being in the form of longitudinal stripes; (iii) in which the five regions composed of pressure-sensitive adhesives and being in the form of longitudinal stripes are, in the following order from one lateral end in the cross direction, a region composed of the second pressure-sensitive adhesive and being in the form of a longitudinal stripe, a region composed of the first pressure-sensitive adhesive and being in the form of a longitudinal stripe, a region composed of the second pressure-sensitive adhesive and being in the form of a longitudinal stripe, a region composed of the first pressure-sensitive adhesive and being in the form of a longitudinal stripe, and a region composed of the second pressure-sensitive adhesive and being in the form of a longitudinal stripe. The pressure-sensitive adhesive sheet 56 has an adhesive face which is substantially smooth without level difference between the regions composed of pressure-sensitive adhesives. This is because the separator 57a has a smooth surface on which the first pressure-sensitive adhesive composition and the second pressure-sensitive adhesive composition are to be provided in Step (1) and Step (2), respectively, and the second pressure-sensitive adhesive composition is arranged in Step (2) so as to lie on (overlay on) the first pressure-sensitive adhesive composition.

The specific pressure-sensitive adhesive layer 55 of the pressure-sensitive adhesive sheet 56 structurally includes two portions of the first pressure-sensitive adhesive 52 and one portion of the second pressure-sensitive adhesive 54, in which all the pressure-sensitive adhesives (two portions of the first pressure-sensitive adhesive 52 and one portion of the second pressure-sensitive adhesive 54) are exposed from the surface facing the separator 57a. Specifically, the specific pressure-sensitive adhesive layer 55 of the pressure-sensitive adhesive sheet 56 has a structure, in which one portion of the second pressure-sensitive adhesive 54 is overlaid on two portions of the first pressure-sensitive adhesive 52, and has a surface which is substantially smooth and from which all the pressure-sensitive adhesives are exposed. In other words, the specific pressure-sensitive adhesive layer 55 of the pressure-sensitive adhesive sheet 56 structurally includes one portion of the second pressure-sensitive adhesive 54 and, embedded (lay) therein, two portions of the first pressure-sensitive adhesive 52 and the surface where the first pressure-sensitive adhesive 52 is provided is substantially smooth.

In further other words, the specific pressure-sensitive adhesive layer 55 in the pressure-sensitive adhesive sheet 56 has a structure which includes two sheet-like portions of the first pressure-sensitive adhesive 52; and one sheet-like portion of the second pressure-sensitive adhesive 54 having on its surface two concave regions being in the form of longitudinal stripes, in which the two portions of the first pressure-sensitive adhesive 52 are lay in the two concave regions, respectively, of the second pressure-sensitive adhesive 54. In the specific pressure-sensitive adhesive layer 55, the first pressure-sensitive adhesive 52 enters the concave portions of the second pressure-sensitive adhesive 54 to be embedded therein so as to provide a smooth surface as one surface of the specific pressure-sensitive adhesive layer 55.

The process speed in the method for producing the pressure-sensitive adhesive sheet according to the embodiment is not limited, but, if being excessively low, may cause problems in productivity and, if being excessively high, may cause insufficient curing of the pressure-sensitive adhesive compositions. Accordingly, the process speed is preferably from 0.1 to 100 meters per minute, and more preferably from 1 to 80 meters per minute.

When a curing step is provided between Step (1) and Step (2), exemplary devices to be used include, but are not limited to, devices exemplified above as the curing device C, such as ultraviolet irradiators and other active energy ray irradiators. In the curing step, the surface of the pressure-sensitive adhesive composition may be covered with a cover film, so as to protect the composition from reaction inhibition due to contact with oxygen in the air.

The method for producing the pressure-sensitive adhesive sheet according to the embodiment may further include one or more of other steps such as a thermal drying step, a step of removing the separator(s), a step of reaffixing the separated separator(s), a step of winding the pressure-sensitive adhesive sheet as a roll, and a step of cutting the pressure-sensitive adhesive sheet to a suitable width.

The method for producing a pressure-sensitive adhesive sheet is advantageous particularly in that the method is resistant to influence by the production speed, production cost, and properties of the pressure-sensitive adhesive compositions, and that the method enables easy control of regions composed of pressure-sensitive adhesives.

The pressure-sensitive adhesive sheet according to the present invention has a specific adhesive face, thereby exhibits a high dry bond strength during bonding and, after use, can easily have a reduced bond strength and shows satisfactory debonding capability, owing to which the pressure-sensitive adhesive sheet is easily separable from an adherend. In particular, the pressure-sensitive adhesive sheet, when having a specific adhesive face including both at least one region composed of a thermal-blowing-agent-containing pressure-sensitive adhesive and at least one region composed of a microparticle-containing pressure-sensitive adhesive, exhibits a further higher dry bond strength and further satisfactory debonding capability.

Exemplary materials for adherends to which the pressure-sensitive adhesive sheet is applied include, but are not limited to, resins such as polycarbonates, polypropylenes, polyesters, polystyrenes, phenol resins, epoxy resins, polyurethanes, ABSs, and acrylic resins; metals such as iron, aluminum, copper, nickel, and alloys of them; and composite materials each including two or more of these materials. The pressure-sensitive adhesive sheet exhibits satisfactory adhesiveness even when the adherend has an uneven shape or curved shape on its surface to which the sheet is applied.

Pressure-sensitive adhesive sheets according to embodiments of the present invention are advantageously usable for bonding of members in various fields such as automobiles, mechanical parts, electric appliances, and building materials. This is because the pressure-sensitive adhesive sheets exhibit satisfactory debonding capability which is useful in debonding for the purpose typically of recycling or reworking.

EXAMPLES

The present invention will be illustrated in further detail with reference to several working examples below. It should be noted, however, that these examples are never construed to limit the scope of the present invention.

Preparation Example 1 of Thermal-blowing-agent-containing Pressure-sensitive Adhesive Composition

A partial polymer (monomer syrup) having a degree of polymerization of 7% was prepared by placing in a four-necked flask 90 parts by weight of 2-ethylhexyl acrylate, 10 parts by weight of acrylic acid, 0.05 part by weight of a photoinitiator (trade name "IRGACURE 184", supplied by BASF SE), and 0.05 part by weight of another photoinitiator (trade name "IRGACURE 651", supplied by BASF SE), and exposing the resulting mixture to an ultraviolet ray in a nitrogen atmosphere for photopolymerization.
The partial polymer was combined with and uniformly mixed with 30 parts by weight of a thermal blowing agent (heat-expandable microspheres, trade name "EXPANCEL 051DU40", supplied by Expancel (a part of AkzoNobel NV)) and 0.2 part by weight of trimethylolpropane triacrylate and thereby yielded a thermal-blowing-agent-containing pressure-sensitive adhesive composition.

Preparation Example 1 of Microparticle-containing Pressure-sensitive Adhesive Composition

A partial polymer (monomer syrup) having a degree of polymerization of 7% was obtained by placing in a four-necked flask 90 parts by weight of 2-ethylhexyl acrylate, 10 parts by weight of acrylic acid, 0.05 part by weight of a photoinitiator (trade name "IRGACURE 184", supplied by BASF SE), and 0.05 part by weight of another photoinitiator (trade name "IRGACURE 651", supplied by BASF SE), and exposing the resulting mixture to an ultraviolet ray in a nitrogen atmosphere for photopolymerization.
The partial polymer was combined with 0.08 part by weight of 1,6-hexanediol diacrylate and 9.0 parts by weight of hollow glass beads (trade name "Fuji Balloon N-40", average particle size: 40 $\mu$m, supplied by Fuji Silysia Chemical Ltd.), uniformly mixed with them using a propeller mixer, and thereby yielded a microparticle-containing pressure-sensitive adhesive composition.

Example 1 of Separator To Be Used

A polyester film, one side of which had been treated with a silicone release agent, was used as a separator. This film was the product under the trade name of "MRN-38", supplied by Mitsubishi Plastics, Inc., with a surface roughness (Ra) of the side which had been treated with the silicone release agent of 0.045 $\mu$m. The separator is hereinafter also referred to as "Separator (A)."

Example 2 of Separator To Be Used

A polyester film, one side of which had been treated with a silicone release agent, was used as a separator.

This film was trade name "MRF-38", supplied by Mitsubishi Plastics, Inc., with a surface roughness (Ra) of the side which had been treated with the silicone release agent of 0.044 $\mu$m. The separator is hereinafter also referred to as Separator (B).

Example 1

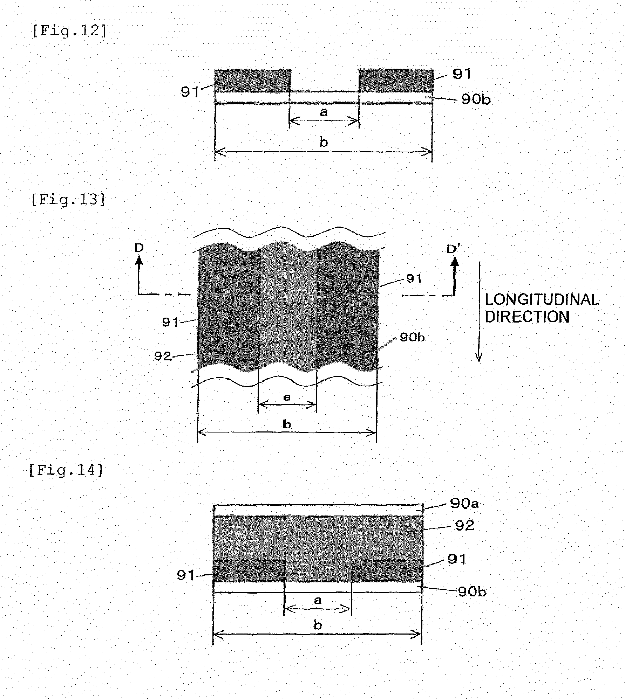

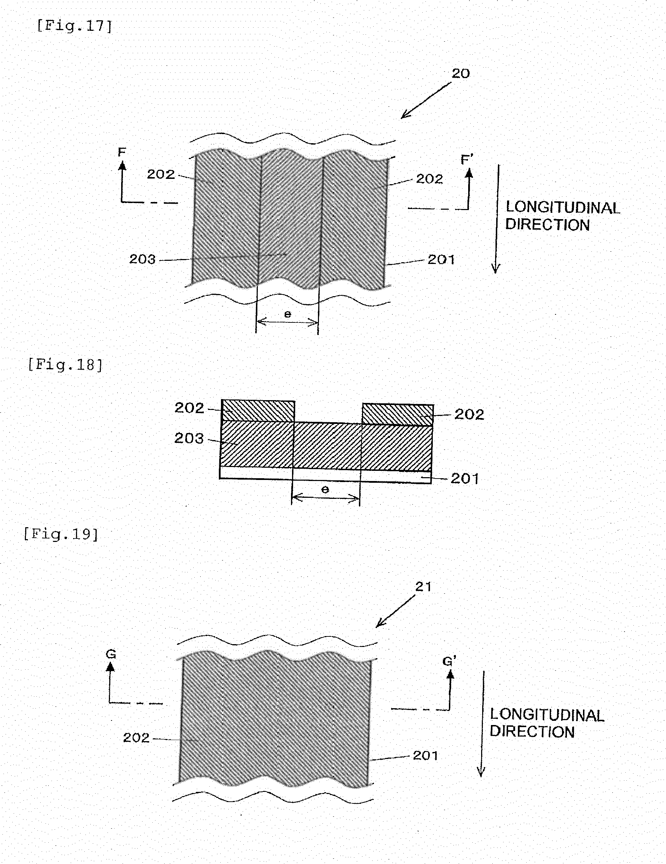

A pressure-sensitive adhesive sheet was prepared by the method for producing the pressure-sensitive adhesive sheet according to the embodiment including following Steps (1), (2), and (3) (using the apparatus illustrated in Fig. 5). Step (1) : The thermal-blowing-agent-containing pressure-sensitive adhesive composition was applied to the release-agent-treated surface of a Separator (B) using a roll knife coater (corresponding to the roll knife coater A in Fig. 5) and thereby yielded a sheet including the separator and, on the release-agent-treated surface thereof, two longitudinal stripes of the thermal-blowing-agent-containing pressure-sensitive adhesive composition extending in the longitudinal direction (see Figs. 11 and 12). The roll knife coater herein had been adjusted so that the thickness of a thermal-blowing-agent-containing pressure-sensitive adhesive after curing (corresponding to the distance "c" in Fig. 16) be 100 $\mu$m; the coat width (corresponding to the distance "b" in Figs. 11 to 16, i.e., the coat width (total width) of the coated composition set by the roll knife coater) be 30 mm; and the width of a portion where the thermal-blowing-agent-containing pressure-sensitive adhesive composition was not coated (width of a dry portion, corresponding to the distance "a" in Figs. 11 to 16) be 5 mm, the portion being the central area in the cross direction.
Figs. 11 and 12 are schematic diagrams of a sheet obtained after the completion of Step (1) of the method for producing a pressure-sensitive adhesive sheet according to the embodiment employed in the examples. Specifically, Figs. 11 and 12 are a schematic plan view (schematic plan view of the side on which the thermal-blowing-agent-containing pressure-sensitive adhesive composition was provided) and a schematic cross-sectional view (schematic cross-sectional view taken along line C-C' in Fig. 11), respectively, of the sheet obtained after the completion of Step (1) of the method for producing a pressure-sensitive adhesive sheet according to the embodiment employed in the examples. In Figs. 11 and 12, the reference signs "90b" stands for Separator (B), "91" stands for a thermal-blowing-agent-containing pressure-sensitive adhesive composition, "a" stands for the width of a portion where the thermal-blowing-agent-containing pressure-sensitive adhesive composition was not coated (width of a dry portion), and "b" stands for the coat width.
Step (2): The sheet obtained from Step (1) and a Separator (A) were introduced into a two-roll coater (corresponding to the two-roll coater B in Fig. 5). The two-roll coater herein had been regulated in its gap so that the total thickness (corresponding to the distance "d" in Fig. 16) of a pressure-sensitive adhesive layer of a resulting pressure-sensitive adhesive sheet be 500 $\mu$m.
Next, the microparticle-containing pressure-sensitive adhesive composition was provided so as to lie on the thermal-blowing-agent-containing pressure-sensitive adhesive composition obtained from Step (1) and thereby yielded an assemblage present between Separator (A) and Separator (B). The assemblage included the microparticle-containing pressure-sensitive adhesive composition and the thermal-blowing-agent-containing pressure-sensitive adhesive composition, in which two portions of the thermal-blowing-agent-containing pressure-sensitive adhesive composition were partially laid on (embedded in) the microparticle-containing pressure-sensitive adhesive composition (see Figs. 13 and 14).
Figs. 13 and 14 are schematic diagrams of a sheet including the assemblage and being obtained after the completion of Step (2) of the method for producing a pressure-sensitive adhesive sheet according to the embodiment employed in the examples. Specifically, Figs. 13 and 14 are a schematic plan view (schematic plan view of Separator (B) side) and a schematic cross-sectional view (schematic cross-sectional view taken along line D-D' in Fig. 13), respectively, of the sheet including the assemblage and being obtained after the completion of Step (2) of the method for producing a pressure-sensitive adhesive sheet according to the embodiment employed in the examples. In Figs. 13 and 14, the reference signs "90a" stands for Separator (A), "90b" stands for Separator (B), "91" stands for a thermal-blowing-agent-containing pressure-sensitive adhesive composition, and "92" stands for a microparticle-containing pressure-sensitive adhesive composition. In Fig. 13, the separator 90a is not shown.
The sheet including the assemblage and obtained after the completion of Step (2) includes one portion of the microparticle-containing pressure-sensitive adhesive composition and two portions of the thermal-blowing-agent-containing pressure-sensitive adhesive composition. In the sheet including the assemblage and obtained after the completion of Step (2), the thermal-blowing-agent-containing pressure-sensitive adhesive composition lies on the microparticle-containing pressure-sensitive adhesive composition on Separator (B) side in certain regions from the both lateral ends toward the central part in the cross direction. In the sheet including the assemblage and obtained after the completion of Step (2), the surface of the assemblage facing Separator (B) includes, in the following order from one lateral end, a region composed of the thermal-blowing-agent-containing pressure-sensitive adhesive composition and being in the form of a longitudinal stripe, a region composed of the microparticle-containing pressure-sensitive adhesive composition and being in the form of a longitudinal stripe, and a region composed of the thermal-blowing-agent-containing pressure-sensitive adhesive composition and being in the form of a longitudinal stripe (see Figs. 13 and 19).

Step (3): The sheet including the assemblage and obtained from Step (2) was introduced into an ultraviolet irradiator (corresponding to the curing device C in Fig. 5), and ultraviolet rays (UV) having a maximum sensitivity at 350 nm were applied from a black light lamp (supplied by Toshiba Ltd.) to both surfaces of the sheet at an irradiance of 5 mW/cm$^2$ for 240 seconds to photo-cure the microparticle-containing pressure-sensitive adhesive composition and the thermal-blowing-agent-containing pressure-sensitive adhesive composition. Thus, a 30-mm wide pressure-sensitive adhesive sheet having a specific adhesive face was obtained. The specific adhesive face was an adhesive face which included a region composed of a microparticle-containing pressure-sensitive adhesive and being in the form of a longitudinal stripe and regions composed of a thermal-blowing-agent-containing pressure-sensitive adhesive and being in the form of a longitudinal stripe, in which the region composed of the microparticle-containing pressure-sensitive adhesive was one region present in 5 mm width at the center part in the cross direction, and the regions composed of the thermal-blowing-agent-containing pressure-sensitive adhesive were two regions present at both lateral ends in the cross direction (see Figs. 15 and 16).

Figs. 15 and 16 are schematic diagrams of the pressure-sensitive adhesive sheet according to Example 1. Specifically, Figs. 15 and 16 are a schematic plane view (schematic plan view seen from Separator (B) side, schematic plan view of the specific adhesive face) and a schematic cross-sectional view (schematic cross-sectional view taken along line E-E' in Fig. 15), respectively, of the pressure-sensitive adhesive sheet according to Example 1. In Figs. 15 and 16, the reference signs "90a" stands for Separator (A), "90b" stands for Separator (B), "101" stands for a thermal-blowing-agent-containing pressure-sensitive adhesive (thermal-blowing-agent-containing pressure-sensitive adhesive unit), and "102" stands for a microparticle-containing pressure-sensitive adhesive (microparticle-containing pressure-sensitive adhesive unit). In Fig. 15, the separator 90a is not shown. The reference signs "a" stands for the width of the region composed of the microparticle-containing pressure-sensitive adhesive in the adhesive face facing Separator (B), "b" stands for the width (total width) of the pressure-sensitive adhesive sheet, "c" stands for the thickness of the thermal-blowing-agent-containing pressure-sensitive adhesive, and "d" stands for the total thickness of the pressure-sensitive adhesive (also the maximum thickness of the microparticle-containing pressure-sensitive adhesive).

The thermal-blowing-agent-containing pressure-sensitive adhesive of the pressure-sensitive adhesive sheet had a gel fraction of 80 percent by weight.

Example 2

A pressure-sensitive adhesive sheet 30 mm wide was prepared by the procedure of Example 1, except for carrying out Step (1) so that the width of a portion where the thermal-blowing-agent-containing pressure-sensitive adhesive composition was not coated (width of a dry portion, corresponding to distance "a") be 10 mm.

Example 3

A pressure-sensitive adhesive sheet 30 mm wide was prepared by the procedure of Example 1, except for carrying out Step (1) so that the width of a portion where the thermal-blowing-agent-containing pressure-sensitive adhesive composition was not coated (width of a dry portion, corresponding to distance "a") be 15 mm.

Example 4

pressure-sensitive adhesive sheet 30 mm wide was prepared by the procedure of Example 1, except for carrying out Step (1) so that the width of a portion where the thermal-blowing-agent-containing pressure-sensitive adhesive composition was not coated (width of a dry portion, corresponding to distance "a") be 12 mm.

Example 5

pressure-sensitive adhesive sheet 30 mm wide was prepared by the procedure of Example 1, except for carrying out Step (1) so that the width of a portion where the thermal-blowing-agent-containing pressure-sensitive adhesive composition was not coated (width of a dry portion, corresponding to distance "a") be 9 mm.

Example 6

A pressure-sensitive adhesive sheet 30 mm wide was prepared by the procedure of Example 1, except for carrying out Step (1) so that the width of a portion where the thermal-blowing-agent-containing pressure-sensitive adhesive composition was not coated (width of a dry portion, corresponding to distance "a") be 6 mm.

Comparative Example 1

The thermal-blowing-agent-containing pressure-sensitive adhesive composition was applied to the release-agent-treated surface of a Separator (B) to form a layer of thermal-blowing-agent-containing pressure-sensitive adhesive composition so as to have a thickness after curing of 100 μm, onto which a Separator (A) was applied so that the surface of the layer was in contact with the release-agent-treated surface of Separator (A), and thereby yielded a thermal-blowing-agent-containing pressure-sensitive adhesive composition layer sheet.
Ultraviolet rays (UV) having a maximum sensitivity at 350 nm were applied from a black light lamp (supplied by Toshiba Ltd.) to both surfaces of the thermal-blowing-agent-containing pressure-sensitive adhesive composition layer sheet at an irradiance of 5 mW/cm$^2$ for 240 seconds to photo-cure the thermal-blowing-agent-containing pressure-sensitive adhesive composition layer and thereby yielded a thermal-blowing-agent-containing pressure-sensitive adhesive sheet including two separators and, present therebetween, a thermal-blowing-agent-containing pressure-sensitive adhesive layer.
Next, the microparticle-containing pressure-sensitive adhesive composition was applied to the release-agent-treated surface of a Separator (A) to form a layer of microparticle-containing pressure-sensitive adhesive composition 30 mm wide so as to have a thickness after curing of 400 μm, onto which a Separator (B) was applied so that the surface of the layer was in contact with the release-agent-treated surface of Separator (B), and thereby yielded a microparticle-containing pressure-sensitive adhesive composition layer sheet 30 mm wide.
Ultraviolet rays (UV) having a maximum sensitivity at 350 nm were applied from a black light lamp (supplied by Toshiba Ltd.) to both surfaces of the microparticle-containing pressure-sensitive adhesive composition layer sheet at an irradiance of 5 mW/cm$^2$ for 240 seconds to photo-cure the microparticle-containing pressure-sensitive adhesive composition layer and thereby yielded a microparticle-containing pressure-sensitive adhesive sheet including two separators and, present therebetween, a microparticle-containing pressure-sensitive adhesive layer.
Next, the thermal-blowing-agent-containing pressure-sensitive adhesive sheet was cut to give two plies of a 12.5-mm wide thermal-blowing-agent-containing pressure-sensitive adhesive sheet. The two plies of the 12.5-mm wide pressure-sensitive adhesive sheet, from which Separator (A) had been removed to expose the thermal-blowing-agent-containing pressure-sensitive adhesive layer, were affixed to both lateral sides of the microparticle-containing pressure-sensitive adhesive layer of the 30-mm wide microparticles-containing pressure-sensitive adhesive sheet, from which Separator (B) had been removed to expose the microparticle-containing pressure-sensitive adhesive layer, and thereby yielded a 30-mm wide pressure-sensitive adhesive sheet having a lengthwise linearly-extending (stripe-shaped) concave region in the central area. The lengthwise linearly-extending concave region of the pressure-sensitive adhesive sheet had a width (corresponding to the distance "e" in Figs. 17 and 18) of 5 mm.
Figs. 17 and 18 are schematic diagrams of the pressure-sensitive adhesive sheet according to Comparative Example 1. Specifically, Figs. 17 and 18 are a schematic plane view (schematic plan view of the side bearing the lengthwise linearly-extending concave region) and a schematic cross-sectional view (schematic cross-sectional view taken along line F-F' in Fig. 17), respectively, of the pressure-sensitive adhesive sheet according to Comparative Example 1. In Figs. 17 and 18, the reference sings "20" stands for a pressure-sensitive adhesive sheet, "201" stands for a separator, "202" stands for a thermal-blowing-agent-containing pressure-sensitive adhesive layer, "203" stands for a microparticle-containing pressure-sensitive adhesive layer, and distance "e" stands for the width of the concave region (cross-wise distance between the two thermal-blowing-agent-containing pressure-sensitive adhesive layers).

Comparative Example 2

30-mm wide pressure-sensitive adhesive sheet having a lengthwise linearly-extending concave region in the central area was prepared by the procedure of Comparative Example 1, except for cutting the thermal-blowing-agent-containing pressure-sensitive adhesive sheet to give two plies of a 10-mm wide thermal-blowing-agent-containing pressure-sensitive adhesive sheet, and applying the two plies of 10-mm wide thermal-blowing-agent-containing pressure-sensitive adhesive sheet respectively to both lateral sides of the 30-mm wide microparticle-containing pressure-sensitive adhesive sheet. The lengthwise linearly-extending concave region in the central area of the pressure-sensitive adhesive sheet had a width (corresponding to the distance "e") of 10 mm.

Comparative Example 3

30-mm wide pressure-sensitive adhesive sheet having a lengthwise linearly-extending concave region in the central area was prepared by the procedure of Comparative Example 1, except for cutting the thermal-blowing-agent-containing pressure-sensitive adhesive sheet to give two plies of a 7.5-mm wide thermal-blowing-agent-containing pressure-sensitive adhesive sheet, and applying the two plies of 7.5-mm wide thermal-blowing-agent-containing pressure-sensitive adhesive sheet respectively to both lateral sides of the 30-mm wide microparticle-containing pressure-sensitive adhesive sheet.

The lengthwise linearly-extending concave region in the central area of the pressure-sensitive adhesive sheet had a width (corresponding to the distance "e") of 15 mm.

Comparative Example 4

thermal-blowing-agent-containing pressure-sensitive adhesive sheet and a microparticle-containing pressure-sensitive adhesive sheet were prepared by the procedure of Comparative Example 1.

Next, the thermal-blowing-agent-containing pressure-sensitive adhesive sheet was cut to give a 30-mm wide thermal-blowing-agent-containing pressure-sensitive adhesive sheet. Independently, the microparticle-containing pressure-sensitive adhesive sheet was cut to give a 30-mm wide microparticle-containing pressure-sensitive adhesive sheet. The 30-mm wide thermal-blowing-agent-containing pressure-sensitive adhesive sheet, from which Separator (A) had been removed to expose the thermal-blowing-agent-containing pressure-sensitive adhesive layer, was applied to the 30-mm wide microparticle-containing pressure-sensitive adhesive sheet, from which Separator (B) had been removed to expose the microparticle-containing pressure-sensitive adhesive layer, and thereby yielded a 30-mm wide multilayer pressure-sensitive adhesive sheet including two separators and, present therebetween, a multilayer structure of a thermal-blowing-agent-containing pressure-sensitive adhesive layer and a microparticle-containing pressure-sensitive adhesive layer.

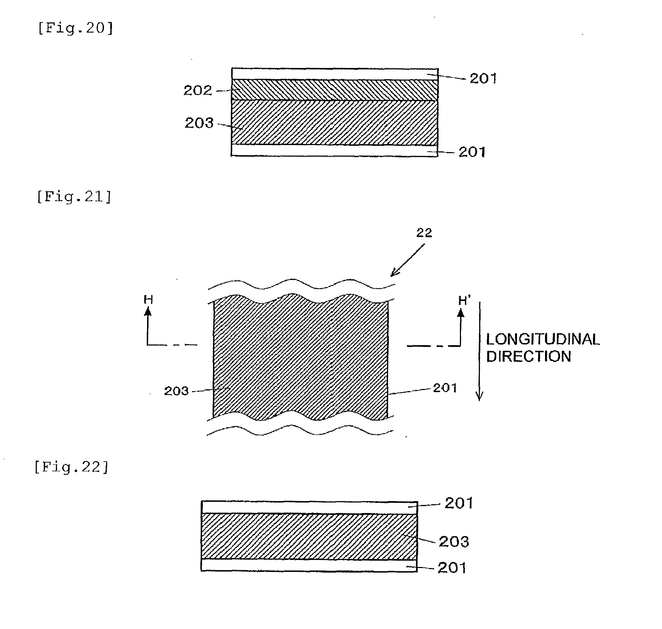

Figs. 19 and 20 are schematic diagrams of the multilayer pressure-sensitive adhesive sheet according to Comparative Example 4. Specifically, Figs. 19 and 20 are a schematic plan view (schematic plan view of the thermal-blowing-agent-containing pressure-sensitive adhesive layer side) and a schematic cross-sectional view (schematic cross-sectional view taken along line G-G' in Fig. 19), respectively, of the multilayer pressure-sensitive adhesive sheet according to Comparative Example 4. In Figs. 19 and 20, the reference signs "21" stands for a multilayer pressure-sensitive adhesive sheet, "201" stands for separators, "202" stands for a thermal-blowing-agent-containing pressure-sensitive adhesive layer, and "203" stands for a microparticle-containing pressure-sensitive adhesive layer. In Fig. 19, one of the two separators is not shown. The multilayer pressure-sensitive adhesive sheet does not have a lengthwise linearly-extending concave region in the central area.

Comparative Example 5

The microparticle-containing pressure-sensitive adhesive composition was applied to the release-agent-treated surface of a Separator (A) to form a 30-mm wide microparticle-containing pressure-sensitive adhesive composition layer so as to have a thickness after curing of 500 $\mu$m, onto which a Separator (B) was applied so that the surface of the layer was in contact with the release-agent-treated surface of Separator (B) and thereby yielded a 30-mm wide microparticle-containing pressure-sensitive adhesive composition layer sheet.

Next, ultraviolet rays (UV) having a maximum sensitivity at 350 nm were applied from a black light lamp (supplied by Toshiba Ltd.) to both surfaces of the microparticle-containing pressure-sensitive adhesive composition layer sheet at an irradiance of 5 mW/cm$^2$ for 240 seconds to photo-cure the microparticle-containing pressure-sensitive adhesive composition layer and thereby yielded a 30-mm wide pressure-sensitive adhesive sheet including two separators and, present therebetween, a microparticle-containing pressure-sensitive adhesive layer.

Figs. 21 and 22 are schematic diagrams of the pressure-sensitive adhesive sheet according to Comparative Example 5. Specifically, Figs. 21 and 22 are a schematic plane view and a schematic cross-sectional view (schematic cross-sectional view taken along line H-H' in Fig. 21), respectively, of the pressure-sensitive adhesive sheet according to Comparative Example 5. In Figs. 21 and 22, the reference signs "22" stands for a pressure-sensitive adhesive sheet, "201" stands for separators, and "203" stands for a microparticle-containing pressure-sensitive adhesive layer. In Fig. 21, one of the two separators is not shown. The pressure-sensitive adhesive sheet does not have a lengthwise linearly-extending concave region in the central area.

Evaluations

On the pressure-sensitive adhesive sheets according to the examples and comparative examples, adhesiveness was evaluated by measuring a bond strength according to the following "method for measuring initial bond strength." Independently, debonding capability was measured according to the following "method for evaluating thermal debonding capability." The results of these are shown in Table 1.

Regarding the pressure-sensitive adhesive sheets according to the examples, the adhesive face including at least one region composed of the thermal-blowing-agent-containing pressure-sensitive adhesive and at least one region composed of the microparticle-containing pressure-sensitive adhesive was defined as a "specific adhesive face." Regarding the pressure-sensitive adhesive sheets according to Comparative Examples 1 to 3 each having the lengthwise linearly-extending concave region in the central area, an adhesive face bearing the linearly-extending concave region was defined as a test adhesive face. Regarding the multilayer pressure-sensitive adhesive sheet according to Comparative Example 4, an adhesive face provided by the thermal-blowing-agent-containing pressure-sensitive adhesive layer was defined as a test adhesive face. Regarding the pressure-sensitive adhesive sheet according to Comparative Example 5, an arbitrary one adhesive face was defined as a test adhesive face.

In the specific adhesive faces of the pressure-sensitive adhesive sheets according to Examples 1 to 6, there was substantially no level difference (bump) between a region composed of the thermal-blowing-agent-containing pressure-sensitive adhesive and an adjacent region composed of the microparticle-containing pressure-sensitive adhesive, demonstrating that the level difference was 5 $\mu$m or less.

The level difference (bump) between a region composed of the thermal-blowing-agent-containing pressure-sensitive adhesive and an adjacent region composed of the microparticle-containing pressure-sensitive adhesive in the specific adhesive faces of the pressure-sensitive adhesive sheets according to the examples was determined in the following manner.

A sample pressure-sensitive adhesive sheet was cut to give a specimen 10 cm long, the surface roughness in the cross direction of the specimen was measured repeatedly at intervals of 2 cm in length using a surface roughness tester (device name "P-15", supplied by KLA-Tencor Corporation), to determined level differences between a region composed of the thermal-blowing-agent-containing pressure-sensitive adhesive and an adjacent region composed of the microparticle-containing pressure-sensitive adhesive in the specific adhesive face. The determined level differences were averaged, and the averaged level difference was defined as the level difference of the tested pressure-sensitive adhesive sheet between the region composed of the thermal-blowing-agent-containing pressure-sensitive adhesive and the region composed of the microparticle-containing pressure-sensitive adhesive.

Method for Measuring Initial Bond Strength

The initial bond strength at the specific adhesive face or test adhesive face was measured in the following manner.

Initially, a separator was removed to expose an adhesive face opposite to the specific adhesive face or test adhesive face, and the exposed adhesive face was applied to a 50-$\mu$m thick poly(ethylene terephthalate) film (PET film, trade name "Lumirror #50", supplied by Toray Industries Inc.), one surface of which had been treated with corona, so that the corona-treated surface was in contact with the applied adhesive face, and thereby yielded a test sample. This test sample was a 30-mm wide pressure-sensitive adhesive sheet supported on a 50-$\mu$m thick PET film, one surface of which had been treated with corona, as a backing.

Next, the other separator of the test sample was removed to expose the specific adhesive face or test adhesive face, and the exposed specific adhesive face or test adhesive face was adhered to an adherend by compression bonding through one reciprocating movement of a 5-kg roller at an ambient temperature of 23°C, followed by aging at 23°C for 30 minutes. The adherend herein was a polycarbonate plate (PC plate, optically transparent, trade name "Polycarbonate Plate", supplied by Takiron Co., Ltd.) which had been washed with ethanol.

After the aging, the test sample was peeled off from the adherend at a tensile speed of 50 mm/min and a peel direction of 90 degrees at an ambient temperature of 23°C using a tensile tester (trade name "TG-1kN", supplied by Minebea Co., Ltd.), and thereby a 90-degree peel strength as a bond strength was measured.

Evaluation of Adhesiveness

A sample having a 90-degree peel strength of 20 N/30 mm or more was evaluated as having good adhesiveness (Good), whereas a sample having a 90-degree peel strength of less than 20 N/30 mm was evaluated as having poor adhesiveness (Poor), which 90-degree peel strengths had been measured according to the method for measuring initial bond strength as above.

Evaluation of Thermal debonding Capability

The thermal debonding capability at the specific adhesive face or test adhesive face was determined.

A separator facing the specific adhesive face or test adhesive face of a sample pressure-sensitive adhesive tape was removed to expose the specific adhesive face or test adhesive face, and the exposed adhesive face was adhered to an adherend by compression bonding through one reciprocating movement of a 5-kg roller at an ambient temperature of 23°C. The adherend herein was a polycarbonate plate (PC plate, optically transparent, trade name "Polycarbonate Plate", supplied by Takiron Co., Ltd.) which had been washed with ethanol. Next, the other separator facing the surface opposite to the specific adhesive face or test adhesive face was removed from the pressure-sensitive adhesive sheet to expose the other adhesive face, and the exposed adhesive face was affixed to an adherend by compression bonding through one reciprocating movement of a 5-kg roller at an ambient temperature of 23°C and thereby yielded a test specimen. The adherend herein was a polycarbonate plate (PC plate, optically transparent, trade name "Polycarbonate Plate", supplied by Takiron Co., Ltd.) which had been washed with ethanol.

The test specimen was aged at 23°C for 30 minutes, then placed as a whole in a hot air dryer, followed by a heating treatment at 130°C for 10 minutes.

After the completion of the heating treatment, how the adherends were released from the test specimen through expansion (foaming) of the thermal blowing agent as a result of heating was evaluated according to the following criteria:

Very good (Excellent): The test specimen could debond without problems while the adherends were fully separated;

Good (o): The test specimen could debond without problems, although part of the adherends was not separated but hardly adversely affecting the debonding; and

Poor (x): The test specimen did not undergo separation from the adherends and failed to debond

TABLE 1

| | | Examples | | | | | | Comparative Examples | | | | |
|---|---|---|---|---|---|---|---|---|---|---|---|---|
| | | 1 | 2 | 3 | 4 | 5 | 6 | 1 | 2 | 3 | 4 | 5 |
| Width of thermal-blowing-agent-containing pressure-sensitive adhesive (total width of region(s) composed of thermal-blowing-agent-containing pressure-sensitive adhesive) (mm) | | 25 | 20 | 15 | 12 | 9 | 6 | 25 | 20 | 15 | 30 | - |
| Width of microparticle-containing pressure-sensitive adhesive (mm) | | 5 | 10 | 15 | 18 | 21 | 24 | 5 | 10 | 15 | - | 30 |
| Percentage of region(s) of thermal-blowing-agent-containing pressure-sensttive adhesive in specific adhesive face or test adhesive face (% (area percentage)) | | 83 | 67 | 50 | 40 | 30 | 20 | 83 | 67 | 50 | 100 | 0 |
| Adhesiveness | Initial bond strength (N/30 mm width) | 23 | 24 | 28 | 31 | 34 | 37 | 13 | 16 | 17 | 16 | 43 |
| | Evaluation | Good | Good | Good | Good | Good | Good | Poor | Poor | Poor | Poor | Good |
| Thermal debonding capability | | Excellent | Excellent | Excellent | Excellent | Excellent | Good | Excellent | Excellent | Excellent | Excellent | Poor |

The samples according to Examples 1 to 5 showed satisfactory adhesiveness and were easily separable (debondable) by heating. The sample according to Example 6 showed no practical problems, though part of the microparticle-containing pressure-sensitive adhesive adhered to the adherend upon thermal debonding and had debonding performance inferior to those of the samples according to Examples 1 to 5.

In contrast, the samples according to Comparative Examples 1 to 3, though having satisfactory thermal debonding capability, did not provide sufficient adhesiveness, because gaps were formed around level differences on the adhesive face surface upon compression bonding to the adherend. The sample according to Comparative Example 4 failed to provide sufficient adhesiveness, though having satisfactory thermal debonding capability. The sample according to Comparative Example 5 failed to debond by heating, though having satisfactory adhesiveness.

Reference Signs List

| | |
|---|---|
| 1 | pressure-sensitive adhesive tape (pressure-sensitive adhesive sheet) |
| 2 | pressure-sensitive adhesive tape (pressure-sensitive adhesive sheet) |
| 11 | specific pressure-sensitive adhesive layer |
| 111 | first pressure-sensitive adhesive (first pressure-sensitive adhesive unit) |
| 112 | second pressure-sensitive adhesive (second pressure-sensitive adhesive unit) |
| 12 | separator |
| A | roll knife coater |
| B | two-roll coater |
| C | curing device |
| 51 | first pressure-sensitive adhesive composition |
| 52 | first pressure-sensitive adhesive (first pressure-sensitive adhesive unit) |
| 53 | second pressure-sensitive adhesive composition |
| 54 | second pressure-sensitive adhesive (second pressure-sensitive adhesive unit) |
| 55 | specific pressure-sensitive adhesive layer |
| 56 | pressure-sensitive adhesive sheet |
| 57a | separator |
| 57b | separator |
| 60 | process roll |
| 61 | sheathing board |
| 90a | Separator (A) |
| 90b | Separator (B) |
| 91 | thermal-blowing-agent-containing pressure-sensitive adhesive composition |
| 92 | microparticle-containing pressure-sensitive adhesive composition |
| 101 | thermal-blowing-agent-containing pressure-sensitive adhesive (thermal-blowing-agent-containing pressure-sensitive adhesive unit) |
| 102 | microparticle-containing pressure-sensitive adhesive (microparticle-containing pressure-sensitive adhesive unit) |
| 20 | pressure-sensitive adhesive sheet |
| 21 | multilayer pressure-sensitive adhesive sheet |
| 22 | pressure-sensitive adhesive sheet |
| 201 | separator |
| 202 | thermal-blowing-agent-containing pressure-sensitive adhesive (thermal-blowing-agent-containing pressure-sensitive adhesive unit) |
| 203 | microparticle-containing pressure-sensitive adhesive (microparticle-containing pressure-sensitive adhesive unit) |

**Claims**

1. A pressure-sensitive adhesive tape or sheet comprising an adhesive face, the adhesive face being substantially smooth and including at least one region composed of a first pressure-sensitive adhesive; and at least one region composed of a pressure-sensitive adhesive other than the first pressure-sensitive adhesive.

2. The pressure-sensitive adhesive tape or sheet according to claim 1, wherein the at least one region composed of the first pressure-sensitive adhesive and the at least one region composed of the other pressure-sensitive adhesive than the first pressure-sensitive adhesive are in the form of longitudinal stripes.

3. The pressure-sensitive adhesive tape or sheet according to claim 2, wherein the at least one region composed of the first pressure-sensitive adhesive and being in the form of a longitudinal stripe and the at least one region composed of the other pressure-sensitive adhesive than the first pressure-sensitive adhesive and being in the form of a longitudinal stripe are provided by a pressure-sensitive adhesive layer in which the first pressure-sensitive adhesive is covered with the other pressure-sensitive adhesive than the first pressure-sensitive adhesive.

4. The pressure-sensitive adhesive tape or sheet according to any one of claims 1 to 3, wherein at least one pressure-sensitive adhesive selected from the group consisting of the first pressure-sensitive adhesive and the other pressure-sensitive adhesive than the first pressure-sensitive adhesive is a pressure-sensitive adhesive containing a thermal blowing agent.

5. The pressure-sensitive adhesive tape or sheet according to claim 4, wherein at least one region composed of the pressure-sensitive adhesive containing a thermal blowing agent occupies 20 percent by area or more of the total area of the adhesive face.

6. The pressure-sensitive adhesive tape or sheet according to one of claims 4 and 5, wherein the pressure-sensitive adhesive containing a thermal blowing agent has a thickness of from 10 to 300 μm.

7. The pressure-sensitive adhesive tape or sheet according to any one of claims 4 to 6, wherein the pressure-sensitive adhesive containing the thermal blowing agent is formed from a pressure-sensitive adhesive composition and has a solvent-insoluble content of from 35 to 99 percent by weight, the pressure-sensitive adhesive composition comprising a monomer mixture containing an alkyl (meth)acrylate whose alkyl moiety having 2 to 18 carbon atoms, or a partial polymer of the monomer mixture; a photoinitiator; a thermal blowing agent; and a multifunctional (meth)acrylate.

8. The pressure-sensitive adhesive tape or sheet according to claim 7, wherein the pressure-sensitive adhesive composition comprises the photoinitiator in a content of from 0.001 to 5 parts by weight, the thermal blowing agent in a content of from 10 to 200 parts by weight, and the multifunctional (meth)acrylate in a content of from 0.001 to 5 parts by weight, per 100 parts by weight of the monomer mixture containing the alkyl (meth)acrylate whose alkyl moiety having 2 to 18 carbon atoms.

9. The pressure-sensitive adhesive tape or sheet according to any one of claims 4 to 8, wherein the thermal blowing agent comprises heat-expandable microspheres.

10. The pressure-sensitive adhesive tape or sheet according to any one of claims 1 to 9, wherein at least one pressure-sensitive adhesive selected from the first pressure-sensitive adhesive and the other pressure-sensitive adhesive than the first pressure-sensitive adhesive is a pressure-sensitive adhesive containing microparticles.

11. The pressure-sensitive adhesive tape or sheet according to claim 10, wherein the pressure-sensitive adhesive containing microparticles is formed from a pressure-sensitive adhesive composition comprising a monomer mixture containing the alkyl (meth)acrylate whose alkyl moiety having 2 to 18 carbon atoms, or a partial polymer of the monomer mixture; a photoinitiator; microparticles; and a multifunctional (meth)acrylate.

12. A method for producing a pressure-sensitive adhesive tape or sheet, the method comprising:

the step 1 of providing on a separator a pressure-sensitive adhesive composition for the formation of a first pressure-sensitive adhesive, and at least one pressure-sensitive adhesive composition for the formation of a pressure-sensitive adhesive other than the first pressure-sensitive adhesive; and
the step 2 of obtaining a pressure-sensitive adhesive tape or sheet having an adhesive face, the adhesive face being substantially smooth and including at least one region composed of the first pressure-sensitive adhesive; and at least one region composed of the other pressure-sensitive adhesive than the first pressure-sensitive adhesive.

13. The method for producing a pressure-sensitive adhesive tape or sheet according to claim 12, wherein the step 1 is the step of providing on part of the separator the pressure-sensitive adhesive composition for the formation of the first pressure-sensitive adhesive, and subsequently providing the at least one pressure-sensitive adhesive composition for the formation of the other pressure-sensitive adhesive than the first pressure-sensitive adhesive so as to lie on the pressure-sensitive adhesive composition for the formation of the first pressure-sensitive adhesive.

**14.** The method for producing a pressure-sensitive adhesive tape or sheet according to one of claims 12 and 13, wherein the step 2 is the step of subjecting the compositions to polymerization to thereby obtain the pressure-sensitive adhesive tape or sheet which includes an adhesive face, the adhesive face being substantially smooth and including at least one region composed of the first pressure-sensitive adhesive; and at least one region composed of the pressure-sensitive adhesive other than the first pressure-sensitive adhesive.

[Fig. 1]

1

111

111

112

[Fig. 2]

1

111

111

11

112

12

[Fig. 3]

[Fig. 4]

[Fig. 5]

TRAVELIG DIRECTION

進行方向

[Fig. 6]

57a

51

A

TRAVELIG DIRECTION

51

51

[Fig. 7]

A

53

A'

LONGITUDINAL
DIRECTION

53

53

51

51

[Fig. 8]

57a

53

57b

51

51

[Fig. 9]

LONGITUDINAL
DIRECTION

[Fig.10]

[Fig.11]

LONGITUDINAL
DIRECTION

[Fig.12]

[Fig.13]

LONGITUDINAL
DIRECTION

[Fig.14]

[Fig.15]

[Fig.16]

[Fig.17]

20

F

202

203

F'

202

201

LONGITUDINAL
DIRECTION

e

[Fig.18]

202

203

202

201

e

[Fig.19]

21

G

G'

202

201

LONGITUDINAL
DIRECTION

[Fig.20]

[Fig.21]

LONGITUDINAL
DIRECTION

[Fig.22]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008120903 A
- JP S61180665 U
- JP 2008012798 A
- JP 2006022189 A